# FASCICULE DE BREVET EUROPEEN

(11) **EP 2 394 503 B1**
(45) Date de publication et mention de la délivrance du brevet: **23.09.2015**
(21) Numéro de dépôt: 11358002.1
(22) Date de dépôt: 18.04.2011
(51) Int. Cl.: A01D 34/412, A01D 34/90

(54) **Tête de coupe rotative utilisant des lames de coupe et appareils de coupe munis d'une telle tête de coupe**
Rotierender Schneidekopf, der Schneideblätter verwendet, und mit einem solchen Schneidekopf ausgestattete Schneidegeräte
Rotary cutting head using cutting blades and cutting devices provided with such a cutting head

(30) Priorité: 21.04.2010 FR 1001690
(43) Date de publication de la demande: 14.12.2011
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- EP-A1- 1 570 719
- EP-A1- 1 815 732
- US-A- 3 320 733

## Description

La présente invention concerne une tête de coupe rotative utilisant des lames de coupe. Elle est avantageusement destinée à l'équipement d'appareils de coupe portables, tels que coupe-herbe, coupe-bordure, débroussailleuse, faux à moteur, taille-haie et analogues. Une telle tête de coupe rotative est décrite dans le document EP 1 570 719 A1.

L'invention concerne également les appareils de coupe portables aptes à être munis de la tête de coupe exposée dans la description qui suit.

Des appareils portables motorisés équipés de telles têtes de coupe sont couramment utilisés aussi bien par les professionnels que par les particuliers, par exemple pour des travaux de débroussaillage ou de tonte d'herbe ou de gazon.

Ces têtes de coupe sont montées à l'extrémité distale d'un manche équipé d'une poignée en U ou poignée double de guidage et de commande du moteur d'entraînement en rotation desdites têtes de coupe, les appareils en faisant application pouvant être munis d'un anneau pour la fixation d'un harnais de portage.

Une tête de coupe de ce genre utilise une lame de coupe métallique ou réalisée en matériau composite et qui peut avoir différentes formes : à trois branches ou lobes, circulaire (disque denté ou scie circulaire), ou toute autre forme. Le plus souvent, ces lames de coupe se fixent de manière démontable à l'extrémité d'un manche, mais cette fixation nécessite, d'une part, une connaissance du principe particulier de l'assemblage « pas à gauche » et l'utilisation d'outils dédiés ou non.

Dans le document EP-1 815 732, est décrite une tête de coupe de tondeuse à gazon comportant un boîtier porte-lames rotatif constitué par l'assemblage d'une coquille supérieure et d'une coquille inférieure, cette tête de coupe comprenant une pluralité de lames de coupe indépendantes les unes des autres (quatre lames de coupe selon l'exemple illustré), montées sur des pivots équidistants portés par la coquille inférieure. Ces pivots verticaux sont disposés, chacun, à égale distance radiale de l'axe de l'arbre assurant l'entraînement en rotation du boîtier et s'étendent vers le haut, parallèlement audit arbre d'entraînement. Le positionnement des lames par rapport à leurs pivots respectifs est obtenu au moyen de la coquille supérieure se verrouillant sur un moyeu central de la coquille inférieure par l'intermédiaire d'un assemblage à baillonette.

La tête de coupe décrite dans le document EP 1 815 732 utilise une pluralité de lame de coupe étroite et résistant mal aux chocs avec des objets durs ; la mise en place successive de chacune de ces lames et dans une certaine mesure, leur dépose, sont des interventions mal aisées et nécessairement longues.

Ces inconvénients se retrouvent dans la tête de coupe de la tondeuse à gazon décrite dans le document US-3 320 733 qui comporte deux lames de coupe indépendantes l'une de l'autre et montées, de manière diamétralement opposée, sur des pivots équidistants portés par un disque entraîné en rotation par un arbre axial d'entraînement, ces pivots verticaux étant disposés, chacun, à égale distance, radiale, de l'axe de l'arbre d'entraînement.

Le but de la présente invention est de sécuriser et de simplifier les manipulations nécessaires pour effectuer la mise en place ou l'enlèvement des lames de coupe, de sorte que ces interventions puissent s'opérer aisément et rapidement, sans l'aide d'aucun outil, aussi élémentaire soit-il.

Selon l'invention, ce but est atteint grâce à un dispositif comprenant une tête de coupe rotative et une lame de coupe interchangeable, agencées complémentairement pour être solidarisées en rotation, une telle tête de coupe comportant des moyens permettant de l'accoupler au moteur d'un appareil de coupe qui peut être constitué par un moteur thermique ou, de préférence, par un moteur électrique.

Selon une première disposition caractéristique, la tête de coupe rotative selon l'invention comprend un boîtier support de lame extérieur solidaire en rotation d'un arbre moteur axial d'entrainement et une lame de coupe interchangeable entraînée en rotation avec ledit boîtier support de lame, cette tête de coupe étant remarquable en ce que l'arbre d'entraînement, le boîtier support de lame et la lame sont agencés de sorte à permettre d'engager la lame de coupe autour de l'arbre d'entraînement, de la déplacer axialement sur ledit arbre d'entraînement, jusqu'à une position dans laquelle il est possible de lui imprimer un mouvement angulaire ou un mouvement linéaire, le boîtier support de lame et la lame de coupe étant pourvus de moyens complémentaires d'accouplement actionnés automatiquement par suite de ce mouvement, de façon à permettre d'effectuer manuellement et sans outil : la mise en place, le changement, le centrage, le positionnement axial de ladite lame par rapport à l'arbre d'entraînement, ainsi que l'accouplement en rotation de ladite lame au boîtier support de lame, par un déplacement axial associé à un mouvement de déplacement angulaire ou linéaire de ladite lame par rapport à l'arbre d'entraînement, jusqu'au déclenchement d'un crabotage automatique réalisé entre ladite lame et ledit boîtier support de lame.

Suivant une autre disposition caractéristique, la tête de coupe selon l'invention comporte un support de lame logé dans le boîtier support de lame extérieur, et solidaire en rotation de l'arbre axial d'entraînement et dudit boitier support, ledit support de lame et la lame de coupe étant pourvus de moyens complémentaires d'accouplement en rotation automatique de ladite lame et dudit arbe d'entraînement, ce support de lame pouvant être déplacé axialement le long dudit arbre d'entraînement pour réaliser le crabotage automatique entre la lame et le boîtier support de lame. Selon un mode d'exécution avantageux, la tête de coupe comprend une ou plusieurs des caractéristiques ci-après :
- Le boîtier extérieur est constitué d'au moins deux parties, soit une partie supérieure et une partie inférieure assemblée de manière démontable à la base de la partie supérieure, la lame de coupe est munie d'un passage axial ou d'un passage central et, insérée entre lesdites parties supérieure et inférieure, le support de lame est solidaire en rotation dudit boîtier et traversé par un arbre axial d'entraînement solidaire en rotation dudit support de lame, et dont la partie supérieure est agencée pour permettre son entraînement en rotation par un moteur ;
- Le support de lame est monté avec une aptitude de mouvement axial par rapport audit boîtier et audit arbre d'entraînement ;
- Le support de lame et la lame de coupe sont pourvus de moyens complémentaires de positionnement et d'accouplement en rotation de cette dernière, ces moyens pouvant être désaccouplés, à partir de leur position active par l'application manuelle simultanée, audit boîtier et audit support de lame, de mouvements axiaux relatifs convergents ;
- La lame de coupe et la portion distale de l'arbre d'entraînement sont pourvus de moyens complémentaires de blocage axial ;
- Le support de lame et la lame sont unis par des moyens d'accouplement automatique lorsque ladite lame est positionnée sur ledit support de lame.
- Les moyens d'accouplement automatique ou dispositifs de crabotage comprennent d'une part, des plots d'accouplement escamotables disposés en sous-face du support de lame et assujettis à l'action de poussée d'un moyen élastique tendant à les repousser en position d'accouplement, et, d'autre part, des orifices ménagés dans la partie centrale de la lame et dans laquelle peuvent être engagés lesdits plots d'accouplement.

Outre le fait que la tête de coupe selon l'invention apporte une solution avantageuse au problème précédemment évoqué, elle a encore notamment pour avantage une construction très simplifiée influant favorablement sur son prix de revient et facilitant son entretien ; d'autre part, elle permet d'opérer le remplacement des lames de coupe endommagées ou émoussées avec une grande facilité et une grande rapidité.

Selon une autre disposition caractéristique, la partie centrale de la lame est constituée de découpes et de parties pleines, deux de ces découpes constituant des orifices d'accouplement, cet aménagement de la partie centrale de la lame permettant : - soit de maintenir en position d'éloignement les plots d'accouplement et les orifices d'accouplement à l'encontre de la poussée exercée par le moyen élastique, - soit l'engagement automatique desdits plots dans les orifices d'accouplement sous la poussée dudit moyen élastique.

Selon un mode d'exécution avantageux, les moyens de positionnement et d'accouplement de la lame de coupe au support de lame comprennent, d'une part, deux plots d'accouplement escamotables disposés en surface dudit support de lame, de part et d'autre de l'ouverture axiale ménagée dans ce dernier pour le passage de l'arbre d'entraînement, et, d'autre part, deux orifices espacés ménagés de part et d'autre du passage axial de la lame, permettant l'engagement de la portion distale de l'arbre d'entraînement.

Selon un autre mode de réalisation, les orifices d'accouplement de la lame sont raccordés par une fente ou boutonnière dont les extrémités débouchent dans lesdits orifices d'accouplement, ladite fente autorisant le passage de la portion distale de l'arbre d'entraînement.

Selon une autre disposition caractéristique, l'accouplement en rotation du support de lame intérieure et du boîtier extérieur est réalisé au moyen de doigts d'entraînement solidaires de la face interne de la cloison supérieure du boîtier extérieur et orientés parallèlement à l'axe de rotation dudit boîtier extérieur, à l'intérieur de celui-ci, ces doigts d'entraînement étant engagés avec une aptitude de coulissement dans des rainures de guidage et d'accouplement ménagées latéralement dans le support de lame, de préférence, dans au moins deux côtés opposés de ce dernier.

Selon un mode de réalisation, l'arbre d'entraînement traverse le support de lame, la portion traversante dudit arbre et le passage axial ménagé dans ledit support de lame présentant un profil complémentaire adapté pour permettre l'entraînement en rotation de la tête de coupe.

Selon une autre disposition caractéristique, la tête de coupe rotative comprend des moyens de maintien de blocage du support de lame sur l'arbre d'entraînement, dans la position d'accouplement.

Suivant un mode d'exécution avantageux, les moyens permettant le blocage axial de la lame de coupe sur l'arbre d'entraînement comprennent, d'une pat, une ouverture axiale que présente la lame de coupe et, d'autre part, une rainure annulaire que comporte la portion distale de l'arbre d'entraînement à distance de son extrémité, la portion extrême dudit arbre d'entraînement présentant, à partir de ladite rainure, une forme circulaire munie de deux gorges longitudinales femelles diamétralement opposées, tandis que l'ouverture axiale de la lame de coupe présente une forme mâle identique à celle du profil de ladite portion extrême.

Grâce à cette disposition, après rotation de la lame de coupe de 90° par rapport à l'axe d'entraînement, ladite lame de coupe est bloquée axialement sur l'arbre d'entraînement à partir d'une seule possibilité de montage, ce qui supprime toute possibilité d'erreur ou d'indécision.

Selon un autre mode d'exécution, les moyens permettant le positionnement et le blocage de la lame de coupe sur la portion distale de l'arbre d'entraînement comprennent, d'une part, une rainure annulaire que comporte la portion distale de l'arbre d'entraînement à distance de son extrémité distale et, d'autre part, une fente ou boutonnière ménagée dans la partie centrale de la lame et présentant une largeur inférieure au diamètre de ladite portion distale, cette largeur étant prévue pour permettre l'engagement et le coulissement des bords longitudinaux de ladite fente dans la rainure annulaire, de sorte que ladite lame de coupe se trouve immobilisée en translation axiale.

Selon une autre disposition caractéristique, le déplacement du support de lame en position active est assuré automatiquement sous l'action d'un moyen élastique de rappel, de préférence constitué par un ressort agissant en compression et interposé entre un cloisonnement supérieur du boîtier extérieur et le support de lame.

Selon une autre disposition caractéristique, le bord inférieur de la partie supérieure du boîtier extérieur et la lame de coupe sont pourvus de moyens complémentaires de positionnement.

Avantageusement, les moyens complémentaires de positionnement du boîtier extérieur et de la lame de coupe comprennent, d'une part, deux lumières délimitées par un bord externe arqué et disposés dans la portion centrale de la lame de coupe, de part et d'autre et à égale distance de l'alignement d'ouvertures que présente la lame et, d'autre pat, des taquets de centrage et d'arrêt diamétralement opposés, dont est munie la base de ladite partie supérieure.

Selon une autre disposition caractéristique, le bord du bec de verrouillage et l'épaulement arrondi sont munis de moyens complémentaires de blocage automatique en fin de mouvement de rotation, lors de l'assemblage des parties du boitier.

Selon un mode d'exécution préféré, ces moyens complémentaires de verrouillage automatique comprennent un tenon que présente la face supérieure des épaulements et une encoche prévue dans le bord extérieur du bec.

Les buts, dispositions caractéristiques et avantages ci-dessus, et d'autres encore, ressortiront mieux de la description qui suit et des dessins annexés dans lesquels :

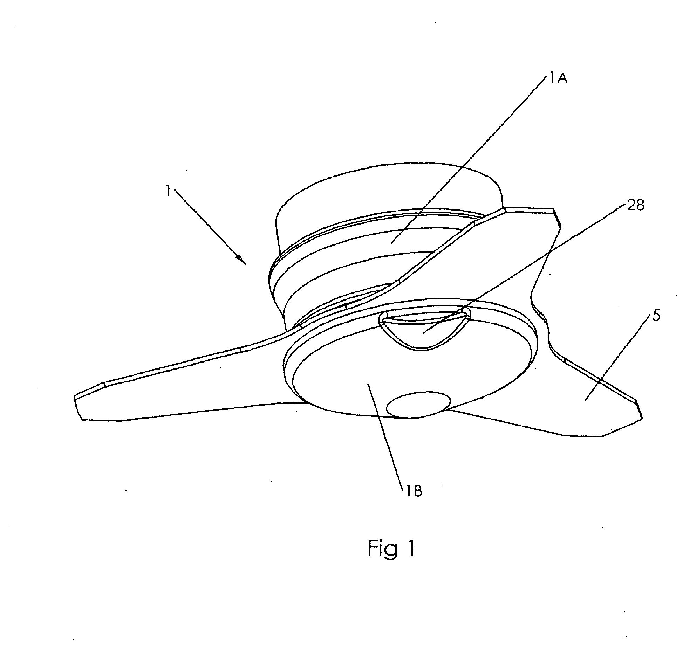

La figure 1 est une vue en perspective d'une tête de coupe utilisant une lame de coupe interchangeable, selon l'invention.
La figure 2 est une vue en perspective de cette tête de coupe dont la partie inférieure ou bol glisseur a été désassemblée.

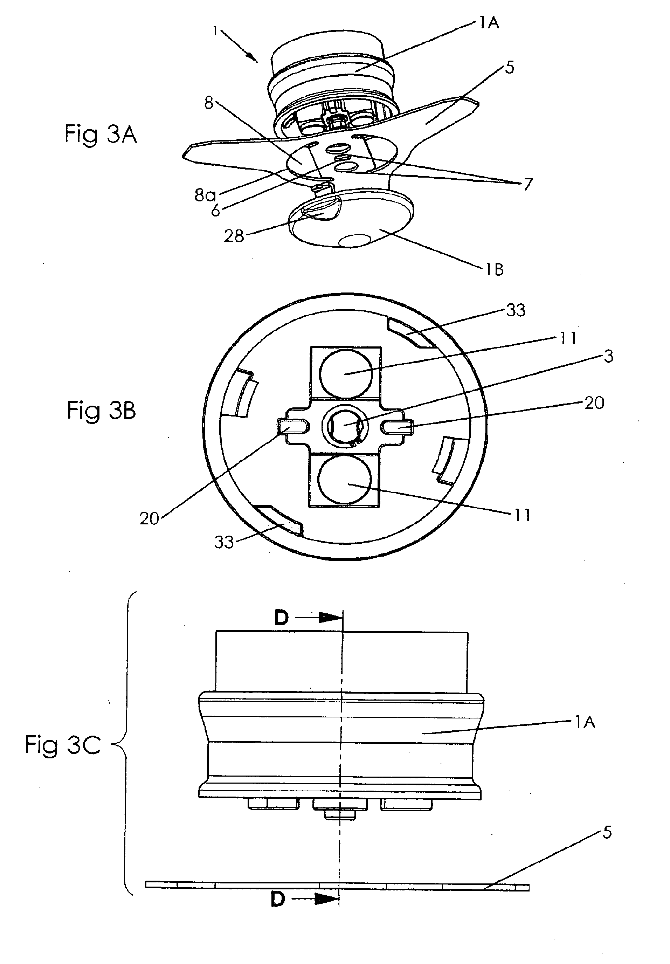

La figure 3A est une vue en perspective montrant la première phase de mise en place, manuellement, d'une lame métallique sur ou contre la face inférieure de la partie supérieure du boîtier extérieur.
La figure 3B est une vue de dessous de la figure 3A, après retrait de la lame de coupe et du bol glisseur
La figure 3C est une vue extérieure éclatée de la figure 3A sans le bol glisseur.
La figure 4A est une vue de dessous et en coupe selon la ligne E-E de la figure 4B.
La figure 4B est une vue en coupe selon la ligne D-D de la figure 3C.
La figure 4C est une vue de détail selon le repère F de la figure 4B.
La figure 5A est une vue en perspective analogue à la figure 3A montrant la deuxième phase du positionnement de la lame métallique.
La figure 5B est une vue de dessous de la figure 5A sans le bol glisseur.
La figure 5C est une vue extérieure de la figure 5A sans le bol glisseur.
La figure 6A est une vue de détail et en coupe selon la ligne E-E de la figure 6B.
La figure 6B est une vue en coupe selon la ligne D-D de la figure 5C.
La figure 6C est une vue de détail selon le repère F de la figure 6B.
La figure 7A est une vue en perspective montrant la troisième phase du positionnement de la lame métallique.
La figure 7B est une vue de dessous de la figure 7A, le bol glisseur étant enlevé.
La figure 7C est une vue extérieure de la figure 7A sans le bol glisseur.

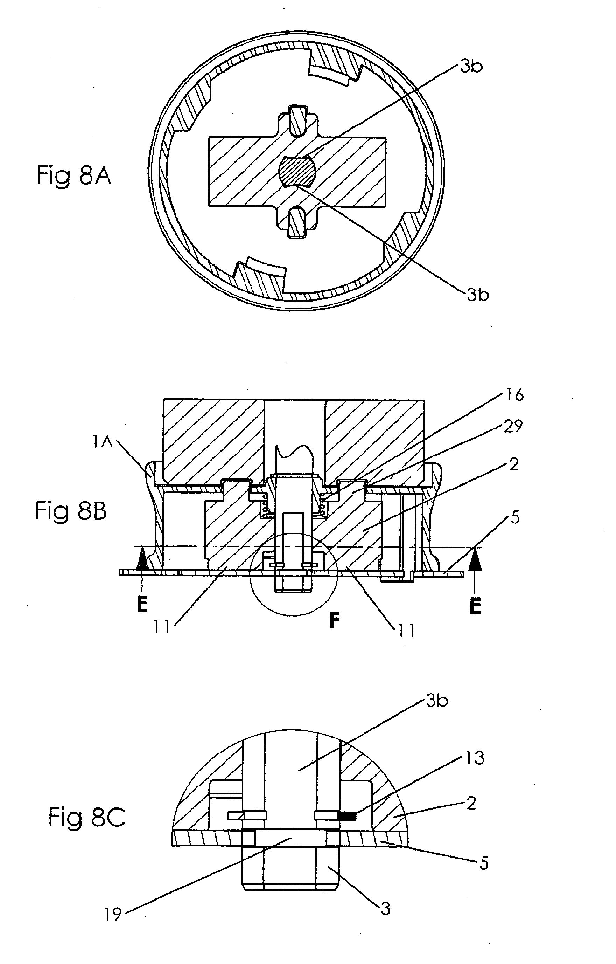

La figure 8A est une vue en coupe selon la ligne E-E de la figure 8B.
La figure 8B est une vue en coupe selon la ligne D-D de la figure 7C.
La figure 8C est une vue de détail selon le repère F de la figure 8B.

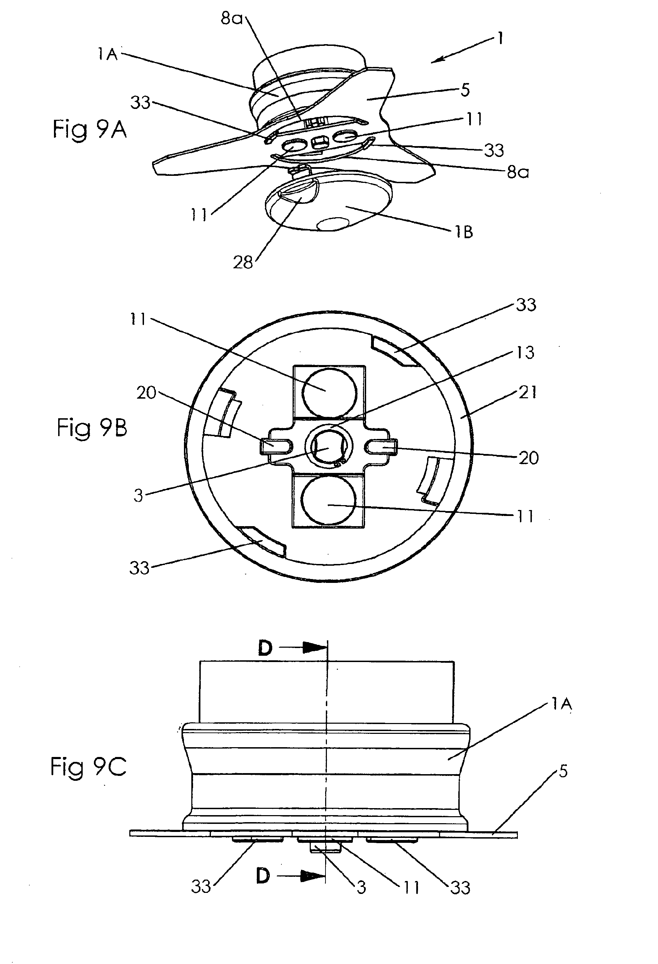

La figure 9A est une vue en perspective montrant la quatrième phase du positionnement de la lame métallique, en position verrouillée.
La figure 9B est une vue de dessous de la figure 9A.
La figure 9C est une vue extérieure de la figure 9A sans le bol glisseur.
La figure 10A est une vue en coupe selon la ligne E-E de la figure 10B.
La figure 10B est une vue en coupe selon la ligne D-D de la figure 9C.
La figure 10C est une vue de détail selon le repère F de la figure 10B.
La figure 11A est une vue en coupe selon la ligne Q-Q de la figure 10A lorsque le bol glisseur est débloqué.
La figure 11B est une vue en coupe selon la ligne G-G de la figure 11A.

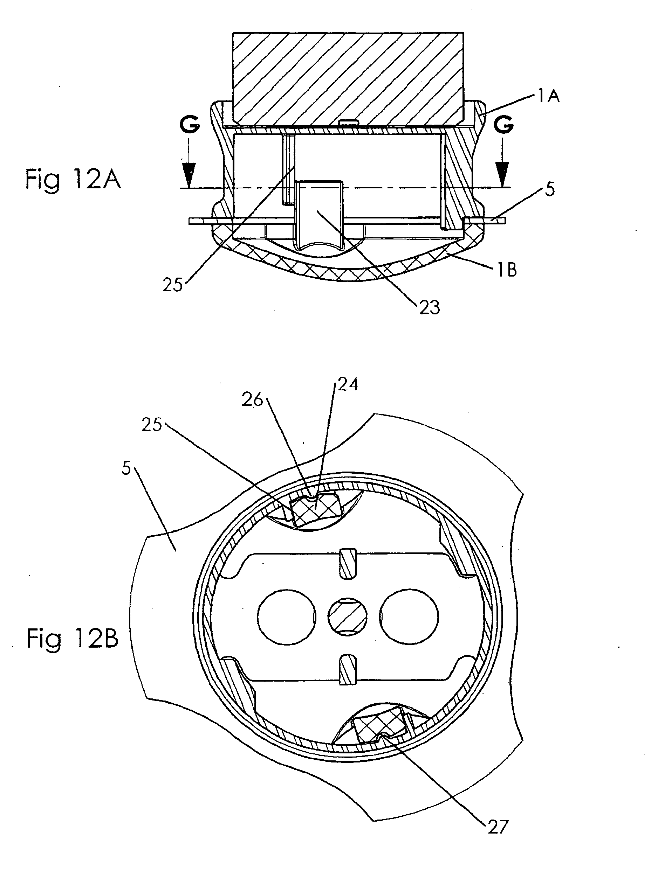

La figure 12A est une vue en coupe selon la ligne Q-Q de la figure 10A lorsque le bol glisseur est bloqué.
La figure 12B est une vue en coupe selon la ligne G-G de la figure 12A.
La figure 13 est une vue en perspective de la tête de coupe dont la partie inférieure ou bol glisseur a été désassemblée, ladite tête de coupe étant équipée d'une variante de la lame de coupe.
La figure 13A est une vue en perspective montrant la première phase de mise en place, manuellement, d'une lame métallique sur ou contre la face inférieure de la partie supérieure du boîtier extérieur, selon la figure 13.
La figure 13B est une vue de dessous de la figure 13A, après retrait de la lame de coupe et du bol glisseur.
La figure 13C est une vue extérieure éclatée de la figure 13A sans le bol glisseur.

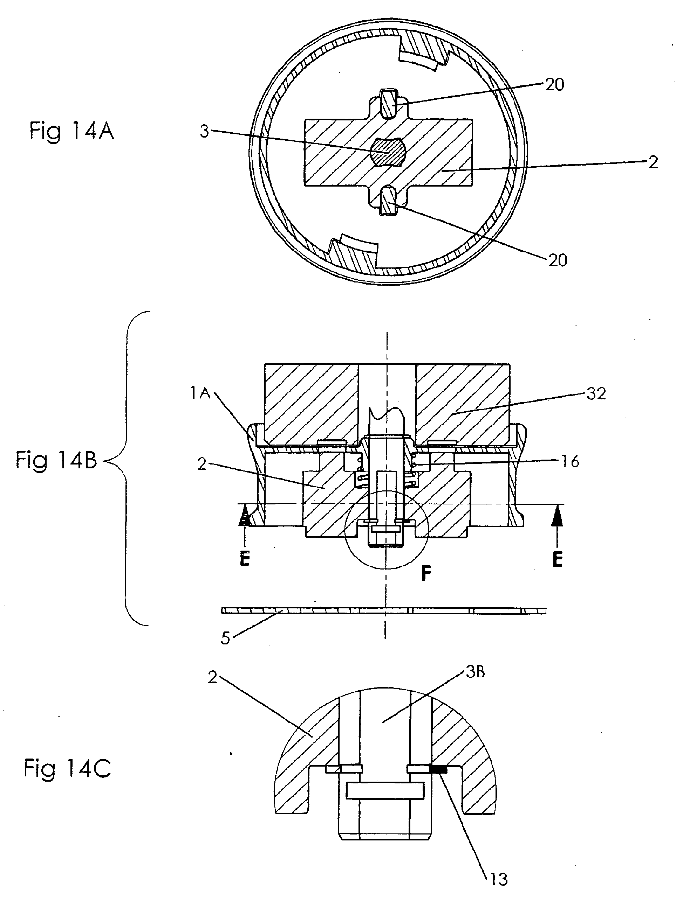

La figure 14A est une vue de dessous et en coupe selon la ligne E-E de la figure 14B.
La figure 14B est une vue en coupe selon la ligne D-D de la figure 13C.
La figure 14C est une vue de détail selon le repère F de la figure 14B.
La figure 15A est une vue en perspective analogue à la figure 13A montrant la deuxième phase du positionnement de la lame métallique.
La figure 15B est une vue de dessous de la figure 15A sans le bol glisseur.
La figure 15C est une vue extérieure de la figure 15A sans le bol glisseur.

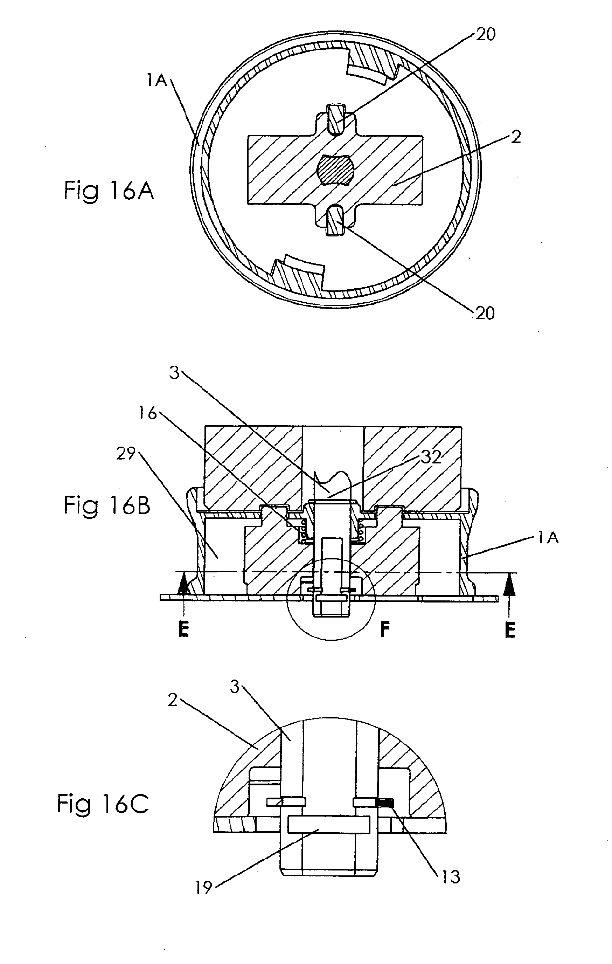

La figure 16A est une vue de détail et en coupe selon la ligne E-E de la figure 16B.
La figure 16B est une vue en coupe selon la ligne D-D de la figure 15C.
La figure 16C est une vue de détail selon le repère F de la figure 16B.
La figure 17A est une vue en perspective analogue à la figure 13A montrant la troisième phase du positionnement de la lame métallique.
La figure 17B est une vue de dessous de la figure 17A, le bol glisseur étant enlevé.
La figure 17C est une vue extérieure de la figure 17A sans le bol glisseur.

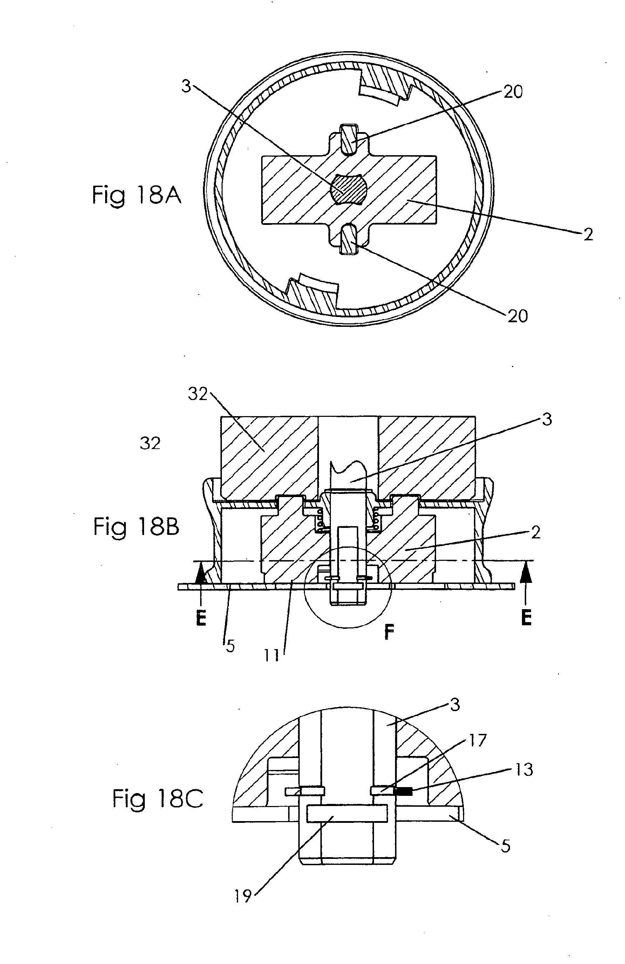

La figure 18A est une vue en coupe selon la ligne E-E de la figure 18B.
La figure 18B est une vue en coupe selon la ligne D-D de la figure 17C.
La figure 18C est une vue de détail selon le repère F de la figure 18B.

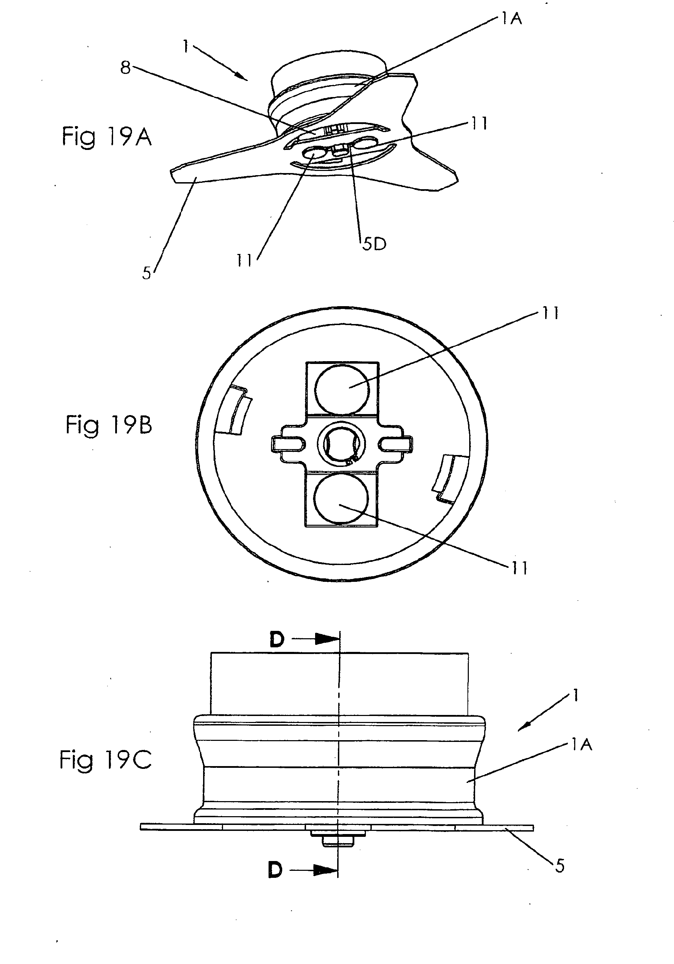

La figure 19A est une vue en perspective analogue à la figure 13A montrant la quatrième phase du positionnement de la lame métallique, en position bloquée.
La figure 19B est une vue de dessous de la figure 19A.
La figure 19C est une vue extérieure de la figure 19A sans le bol glisseur.

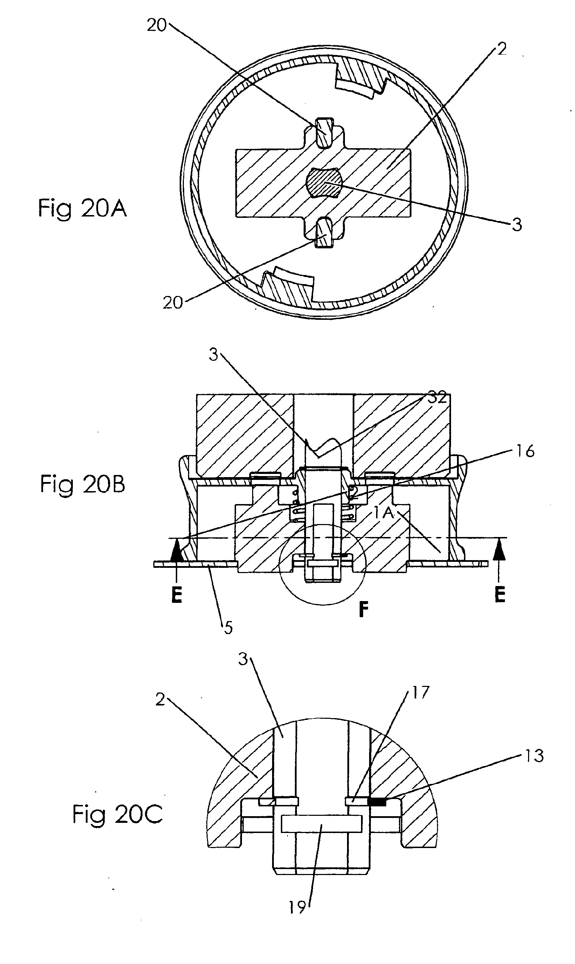

La figure 20A est une vue en coupe selon la ligne E-E de la figure 20B.
La figure 20B est une vue en coupe selon la ligne D-D de la figure 19C.
La figure 20C est une vue de détail selon le repère F de la figure 20B.
La figure 21 est une vue de détail et en coupe axiale de la tête de coupe selon la ligne A-A de la figure 2B dans une deuxième disposition constructive.
La figure 21A est une vue en coupe selon la ligne F-F de la figure 21 avec la partie inférieure 1 B du boîtier inférieur débloquée.
La figure 21B est une vue en coupe selon la ligne F-F de la figure 21 avec la partie inférieure 1 B du boîtier inférieur bloquée.
La figure 21C est une vue en coupe et en plan selon la ligne T-T de la figure 21A.
La figure 21D est une vue en coupe et en plan analogue selon la ligne T-T de la figure 21B.
La figure 22 est une vue en coupe suivant la ligne U-U de la figure 21D.

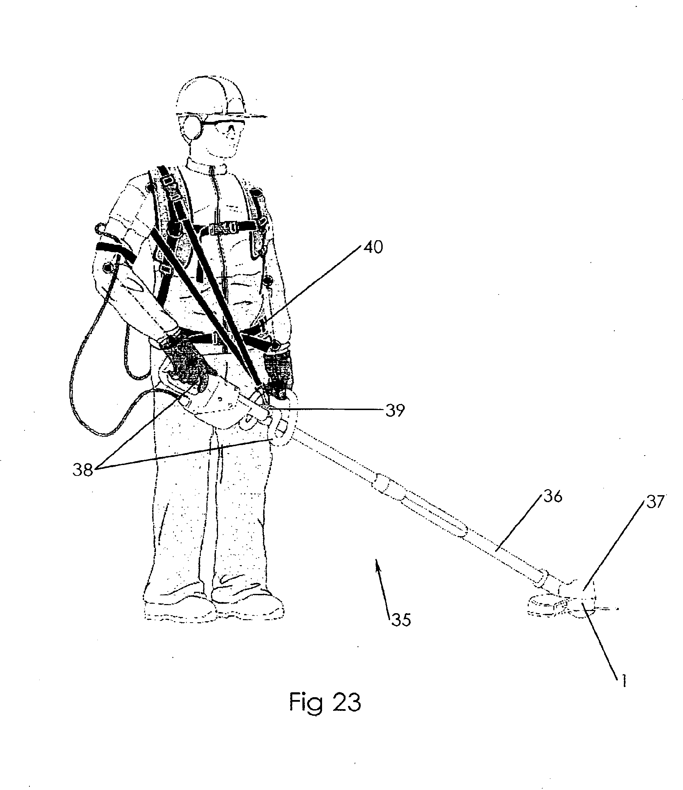

La figure 23 est une vue en perspective d'un coupe herbe équipé d'une tête de coupe utilisant une lame métallique, selon l'invention.

On se réfère auxdits dessins pour décrire des exemples intéressants, quoique nullement limitatifs, de réalisation de la tête de coupe selon l'invention.

Dans l'exposé qui suit et dans les revendications, des mots tels que « haute », « basse », « supérieure », « inférieure », « latérale » , ... , sont utilisés en référence à la position de la tête de coupe en cours de travail, afin de faciliter la description de l'invention. Ces mots n'ont donc aucun caractère restrictif.

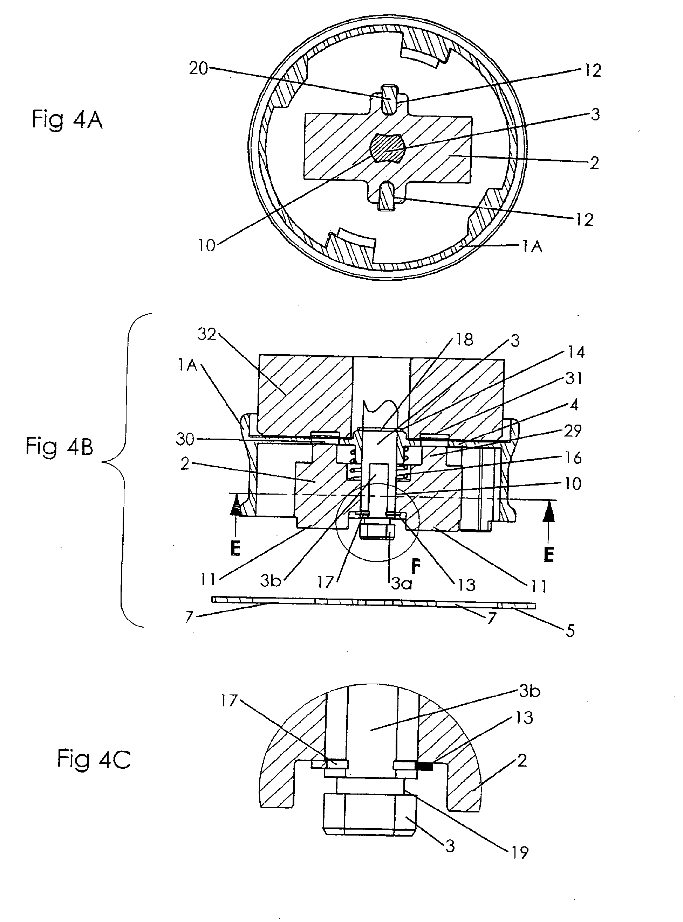

La tête de coupe selon l'invention comprend une enveloppe extérieure ou boîtier extérieur 1 constitué en au moins deux parties, soit une partie supérieure de forme générale cylindrique 1A et une partie inférieure de forme sensiblement hémisphérique ou conique 1 B appelée « bol glisseur », assemblée de manière démontable à la base de la partie supérieure. A l'intérieur de ce boîtier extérieur, est monté un support de lame 2 (Fig. 4A, 4B, 4C).

Ce support de lame 2 est solidaire en rotation du boîtier extérieur 1 et cet ensemble est assujetti à un moyen d'accouplement permettant de le relier à l'arbre d'entraînement d'un moteur thermique ou, de préférence, d'un moteur électrique, ou d'un renvoi d'angle équipant un appareil de coupe portable.

Ce moyen est préférentiellement constitué par un arbre axial d'entraînement 3 s'étendant extérieurement en direction du haut, au dessus d'un cloisonnement 4 prévu à la partie supérieure du boîtier extérieur.

Le support de lame 2 peut être déplacé axialement le long de l'arbre d'entraînement 3.

La tête de coupe utilise une lame de coupe interchangeable 5 engagée entre les deux parties 1A-1 B du boîtier extérieur 1.

Cette lame de coupe peut avoir différentes dimensions et formes : par exemple à trois branches radiales ou tridents (comme illustré), circulaire (disque denté ou scie circulaire) ou toute autre forme. Elle peut être réalisée en tout matériau présentant les qualités de dureté et de résistance à l'usure nécessaire, par exemple en acier trempé, en matériau composite, en matière plastique rigide, etc. Elle peut être à tranchants doubles et, de ce fait, réversible.

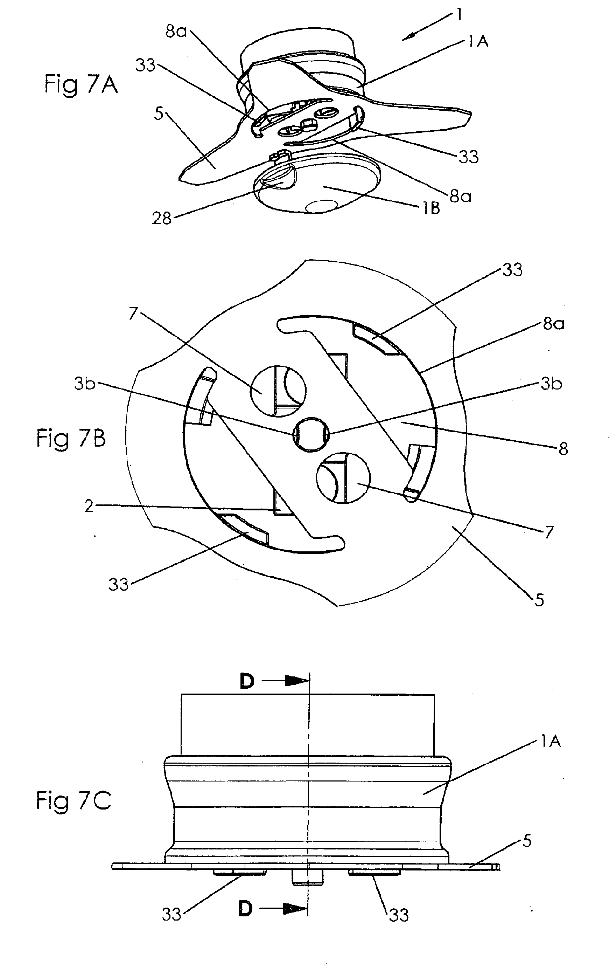

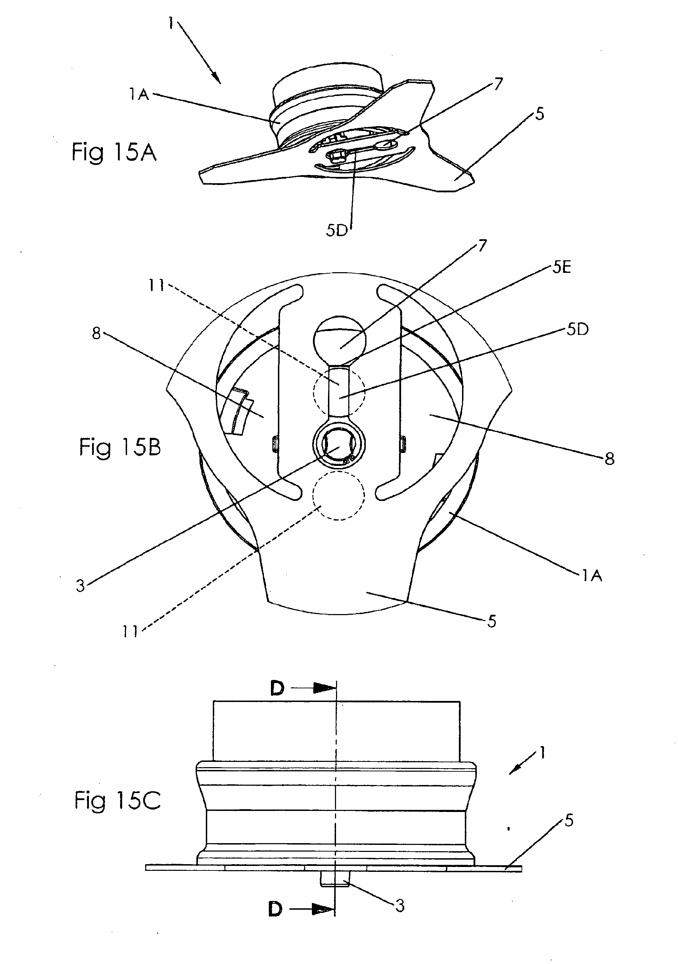

Deux modes d'exécution de cette lame sont décrits dans la suite du présent exposé (figures 7A-7B ; 15A-15B).

Selon une disposition caractéristique de l'invention, la partie centrale de la lame de coupe présente plusieurs ouvertures ou lumières, à savoir :
- une ouverture axiale 6 pour accouplement à l'arbre d'entraînement 3 ;
- deux orifices 7, de préférence de forme circulaire, pour accouplement au support de lame 2, ces orifices étant disposés à égale distance de l'ouverture axiale 6 et de manière diamétralement opposée par rapport à celle-ci ;
- deux lumières 8 délimitées par un bord externe circulaire 8a, disposées de part et d'autre de l'alignement d'ouvertures 7, 6, 7 et ayant comme centre l'axe de rotation de la tête de coupe, pour permettre le centrage de la lame de coupe 5 par rapport à l'axe d'entraînement 3, ainsi que l'assemblage de la partie supérieure 1A du boîtier extérieur et de la partie inférieure 1B de ce dernier, à travers ladite lame 5 mise en place sur l'extrémité distale de l'arbre d'entraînement.

Le support de lame 2 comporte un passage axial 10 traversé par la portion inférieure de l'arbre axial 3 ; il est muni, en sous-face, de deux plots d'accouplement 11 disposés à égale distance du passage axial 10 et diamétralement opposés par rapport audit passage. Ces plots d'accouplement 11 solidaires en translation du support de lame 2, présentent, de préférence, une forme cylindrique et une hauteur sensiblement supérieure à l'épaisseur de la lame. Ils sont conformés et dimensionnés pour pouvoir s'engager automatiquement dans les orifices 7 de la lame de coupe 5.

Selon un autre mode d'exécution, les ouvertures de la partie centrale de la lame de coupe peuvent être constituées par :
- une fente médiane rectiligne longitudinale ou boutonnière 5D orientée diamétralement, et,
- deux orifices 7 dans chacun desquels débouche l'une des extrémités 5E de la fente 5D.

Les deux orifices 7 coopèrent avec les plots d'accouplement 11 du support de lame 2, pour réaliser la fixation amovible de celle-ci, sur ledit support de lame.

La fente 5D présente une largeur inférieure au diamètre de la partie distale 3A de l'arbre d'entraînement 3. Cette largeur est telle qu'elle permet un coulissement des bords longitudinaux de la fente dans une rainure annulaire 19 décrite dans la suite du présent exposé et que comporte la portion distale 3A de l'arbre d'entraînement 3 à distance de son extrémité distale.

Le support de lame 2 est solidaire en rotation, d'une part, de l'arbre d'entraînement 3 et, d'autre part, du boîtier extérieur 1, tandis qu'il est monté avec une aptitude de translation relative d'amplitude limitée, d'une part, le long dudit arbre d'entraînement et, d'autre part, dans la partie supérieure 1A dudit boîtier extérieur.

Autrement dit, l'arbre d'entraînement 3, le support de lame 2, et le boîtier extérieur 1 sont solidaires en rotation, tandis que le support de lame 2 est monté avec une possibilité de translation d'amplitude limitée (de l'ordre d'une dizaine de millimètres) par rapport à l'ensemble constitué par le boîtier extérieur 1 et l'arbre d'entraînement 3.

Selon l'exemple de réalisation illustré, l'arbre d'entraînement 3 traverse le passage axial 10 ménagé dans le support de lame 2, et la portion traversante 3B de l'arbre 3 et ledit passage axial 10 présentent un profil complémentaire adapté pour permettre l'entraînement en rotation dudit support et, par conséquent, du boîtier extérieur 1 de la tête de coupe.

Des moyens sont prévus pour limiter l'amplitude de la translation axiale du support de lame 2 sur la portion traversante 3B de l'arbre d'entraînement 3. Ces moyens comprennent, par exemple, deux circlips 13, 14 engagés dans des gorges annulaires 17, 18 dont est muni l'arbre d'entraînement 3.

Selon un mode d'exécution, l'accouplement en rotation du support de lame intérieur 2 et du boîtier extérieur 1A est réalisé au moyen de doigts d'entraînement 20 solidaires de la face interne de la cloison supérieure 4 du boîtier extérieur 1A et orientés parallèlement à l'axe de rotation de la tête de coupe, en direction de l'intérieur de celle-ci, ces doigts d'entraînement 20 étant engagés, avec une aptitude de glissement dans des rainures 12 ménagées dans le support de lame 2, de préférence dans au moins deux côtés opposés dudit support, et, plus précisément, dans les grands côtés de ce dernier.

Un moyen élastique tend à éloigner en permanence le support de lame 2 du cloisonnement supérieur 4 du boîtier extérieur 1A en direction de l'extrémité distale 3A de l'arbre d'entraînement 3. Ce moyen élastique tend ainsi à repousser les plots d'accouplement 11 en position active, selon laquelle ces derniers se trouvent engagés dans les orifices d'accouplement 7 de la lame de coupe 5 installée sur ladite extrémité distale, de sorte à réaliser une liaison par crabotage entre ladite lame de coupe et ledit support de lame.

Selon un mode d'exécution préféré, ce moyen est constitué par un ressort 16 agissant en compression et interposé entre un cloisonnement supérieur 4 du boîtier extérieur 1A et le support de lame 2 de sorte à permettre le rappel automatique dudit support de lame et des plots 11 en position d'accouplement avec la lame.

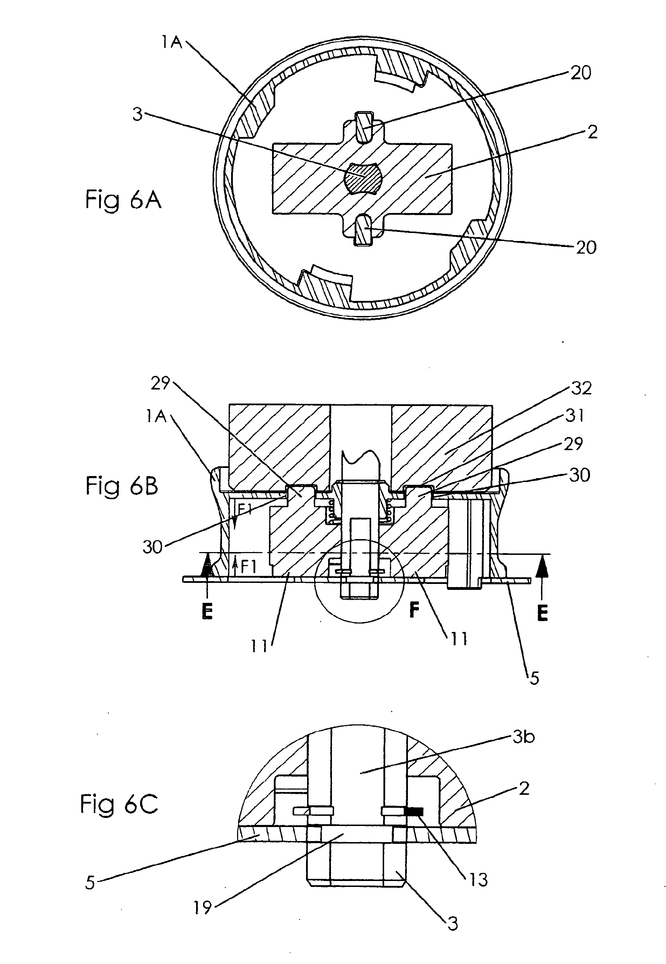

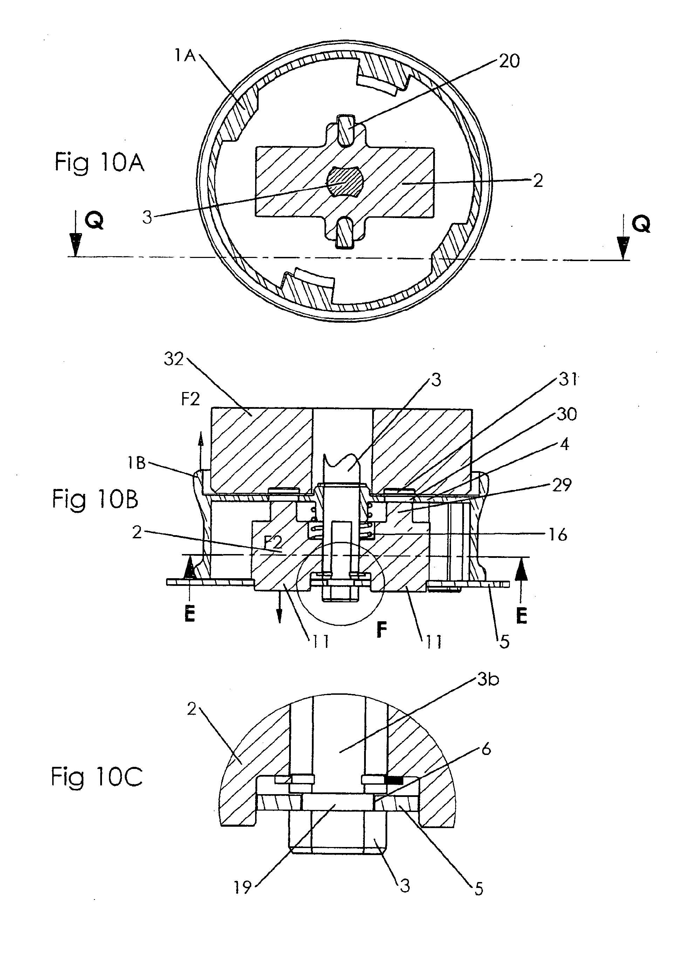

On comprend que l'application simultanée de mouvements axiaux convergents (flèche F1, figure 6B) au boîtier extérieur 1A et au support de lame 2 logé à l'intérieur de ce boîtier, permet de rapprocher ledit support de lame de la cloison supérieure 4 dudit boîtier extérieur 1A et de ce fait l'effacement des plots d'accouplement 11 et le désaccouplement de la lame, tandis que l'application simultanée de mouvement axiaux divergents (flèche F2, figure 10B) audit boîtier extérieur 1A et audit support 2 de lame permet l'engagement des plots d'accouplement 11 dans les orifices 7 d'accouplement de la lame.

Selon une importante caractéristique de l'invention, les mouvements axiaux convergents (flèche F1) du boîtier extérieur 1A et du support de lame 2 sont obtenus par l'application d'une force manuelle, tandis que l'application simultanée de mouvement axiaux divergents (flèche F2) résulte de l'action de rappel automatique du ressort 16.

Selon un autre mode d'exécution avantageux, les moyens permettant le blocage axial de la lame de coupe 5 sur l'arbre d'entraînement 3 comprennent, d'une part, une ouverture axiale 6 que présente la lame de coupe et, d'autre part, une rainure annulaire 19 que comporte la portion distale 3A de l'arbre d'entraînement 3, à distance de son extrémité, la portion extrême dudit arbre d'entraînement 3 présentant à partir de ladite rainure 19 une forme circulaire munie de deux gorges longitudinales femelles 3B diamétralement opposées, tandis que l'ouverture axiale 6 de la lame 5 présente une forme mâle identique à celle du profil de ladite portion extrême.

Plus précisément, l'ouverture axiale 6 de la lame de coupe 5 présente aux moins deux lobes 5A diamétralement opposés de forme ou profil identique à celles des gorges femelles 3B, ces lobes 5A sont disposés en saillie dans l'ouverture axiale 6, avec une orientation par rapport aux deux trous d'accouplement 7 telle que ceux-ci soient décalés d'environ 90° par rapport aux plots d'entraînement 11 du support de lame 2 au moment où la lame de coupe est engagée sur la partie 3B de l'axe d'entraînement 3 . Ces lobes 5A peuvent occuper deux positions angulaires extrêmes, soit une première position permettant le coulissement des lobes 5A dans les gorges 3B et, par conséquent, le glissement de la lame de coupe 5 et du support de lame 2 en direction de l'extrémité de l'arbre d'entraînement 3, le long de la portion distale 3A, et une deuxième position où les lobes 5A sont engagés, par une rotation d'environ 90°de la lame de coupe 5, dans la rainure 19 de l'axe d'entraînement 3 avec pour effet de s'opposer à tout mouvement axial de la lame 5 et de permettre aux plots 11 du support de lame 2 de s'engager automatiquement, sous la poussée du ressort 16, dans les orifices d'accouplement 7 de la lame de coupe pour réaliser, à la fin de ce mouvement, la fonction d'entraînement en rotation de ladite lame.

Selon un autre mode d'exécution, les moyens permettant le blocage de la lame de coupe 5 sur le support de lame 2 comprennent d'une part dans la partie médiane 5C de la lame une fente rectiligne longitudinale orientée diamétralement, ou boutonnière 5D. Cette fente ou boutonnière débouchent, à chacune de ses extrémités, dans l'un des orifices 7. Les deux orifices 7 permettent la descente et, par suite, l'engagement des plots 11 du support de lame 2 au moment où la lame de coupe est poussée manuellement et linéairement jusqu'à ce que la lame vienne en appui sur la face inférieure du boîtier extérieur 1A. En même temps que cet appui de la lame 5 sur la face inférieure 21 du boîtier extérieur 1A, les bords 5F de la boutonnière 5D se trouvent en regard de la rainure annulaire 19 effectuée dans la partie distale de l'arbre d'entraînement 3. Une poussée manuelle linéaire de la lame 5 est appliquée jusqu'à la rencontre des orifices 7 avec les plots 11 du support 2 qui, sous l'action du ressort de compression 16 autorise l'engagement automatique desdits plots 11 dans lesdits orifices 7 de la lame.

Comme indiqué précédemment, un circlips de retenue 13 est installé dans la gorge 17 afin de limiter la course axiale du support de lame 2 sur l'arbre d'entraînement 3 en évitant toute sortie de l'arbre d'entraînement 3 par rapport audit support de lame 2.

L'assemblage rigide des parties supérieure 1A et inférieure 1B du boîtier extérieur 1 peut être réalisé par des moyens autorisant le démontage de ces parties en cas de besoin, par exemple la partie inférieure peut être encastrée dans la partie supérieure et retenue dans celle-ci au moyen de pattes d'assemblage flexibles comportant un bec de retenue se crochetant sur le bord inférieur de la base de la partie inférieure.

Le bol glisseur hémisphérique 1 B constituant la partie inférieure du boîtier extérieur 1 peut être assemblé à la base de la partie supérieure 1A de celui-ci par tout moyen de fixation rapide convenable ne nécessitant pas d'outils. Ce bol glisseur permet l'appui de la tête de coupe sur le sol, de sorte à faciliter l'utilisation des appareils munis de cette tête, tout en maintenant la lame de coupe à une distance de quelques centimètres du sol.

De préférence, la partie basse de la paroi latérale de la partie supérieure 1A du boîtier extérieur 1 et la partie supérieure circulaire du bol glisseur 1 B, sont munies de moyens de retenue complémentaires dont l'assemblage nécessite seulement un mouvement axial relatif des deux pièces, suivi d'un mouvement de rotation d'amplitude limitée permettant de mettre en prise les organes complémentaires desdits moyens de retenue.

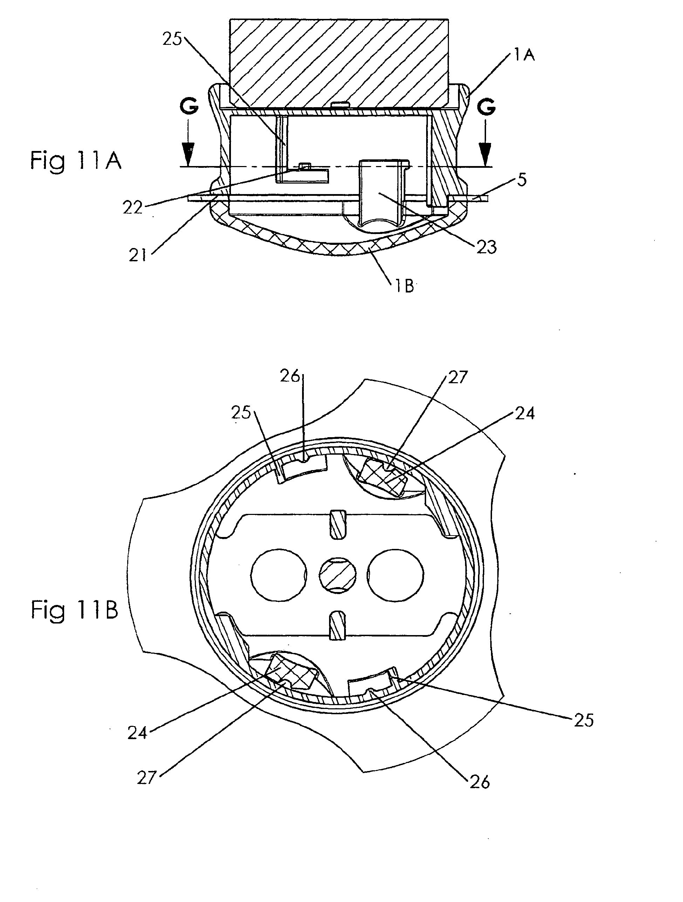

La surface interne de la paroi latérale cylindrique de la partie supérieure 1A du boitier extérieur 1 est par exemple munie, au voisinage et le long de son bord inférieur circulaire 21, d'au moins deux épaulements arrondis 22 (figure 11A) qui, selon le mode d'exécution représenté, sont diamétralement opposés.

D'autre part, le bol glisseur 1B est pourvu d'au moins deux pattes d'accrochage 23 diamétralement opposées s'étendant parallèlement à l'axe de celui-ci, et dont l'extrémité libre est munie d'un bec ou ergot de verrouillage 24 orienté en direction de cet axe (figures 11A, 11B).

Une butée 25 disposée à l'une des extrémités de chaque épaulement 22 limite le mouvement rotatif des becs ou ergots de verrouillage 24 lors de la mise en place du bol glisseur 1B dans la position d'assemblage.

D'autre part, le bord du bec 24 et l'épaulement arrondi 22 des becs sont munis de moyens complémentaires de verrouillage, en fin de mouvement de rotation, lors de l'assemblage des parties 1A et 1B du boîtier extérieur 1. Ces moyens peuvent être constitués par un téton 26 que présente la face supérieure des épaulements 22 et par une encoche 27 prévue dans le bord extérieur du bec 24 et dans laquelle s'engage automatiquement ledit téton de verrouillage en fin du mouvement rotatif d'assemblage.

Selon l'invention, la mise en place et le démontage d'une lame mobile interchangeable sur une tête de coupe se conçoit bien après l'exposé qui précède.

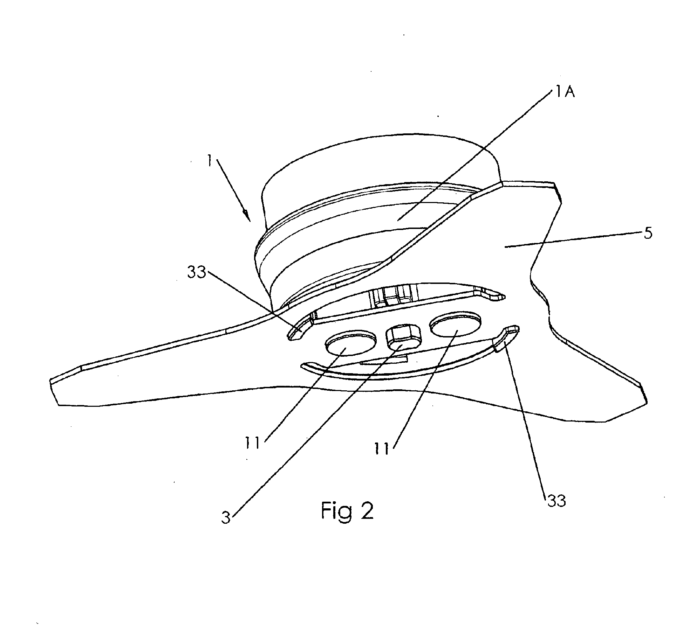

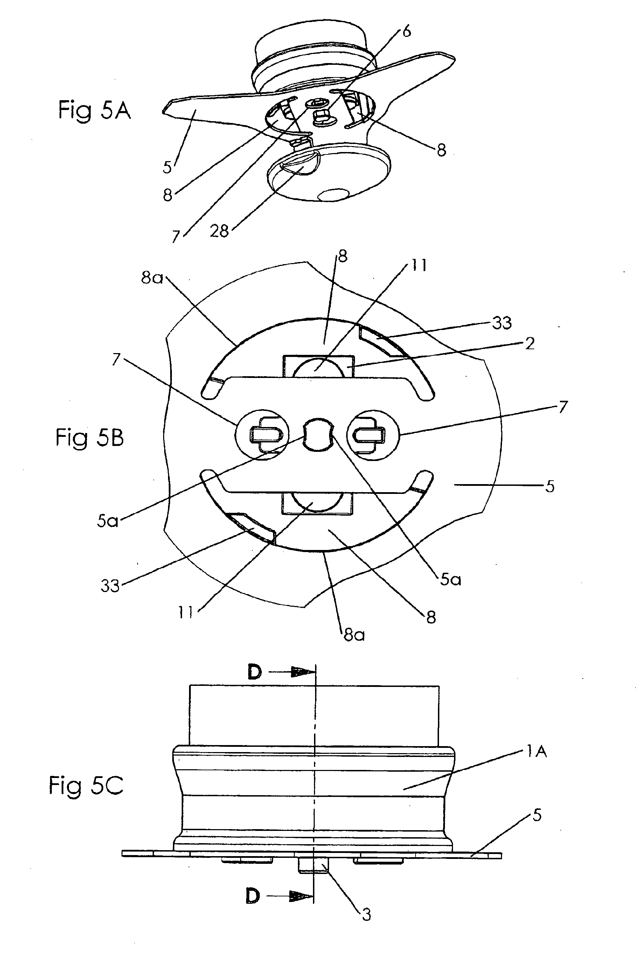

S'il s'agit d'une lame de coupe du type notamment représenté aux figures 2, 5B et 7B :
- on retire le bol glisseur 1B par un mouvement de rotation, afin de désaccoupler les épaulements 22 et les pattes de verrouillage 23 ; la face externe hémisphérique comportant deux empreintes 28, diamétralement opposées, facilitant cette manipulation ;
- on place la lame 5 sur l'extrémité distale de l'arbre d'entraînement 3 (une seule position étant possible en raison du profil complémentaire de ladite extrémité et de l'ouverture axiale 6 de la lame 5) ; dans cette position la lame de coupe est en appui sur les plots 11 du support de lame 2 ;
- on imprime un mouvement de rapprochement ou mouvement convergent au support de lame 2 et au boîtier extérieur 1, en exerçant une pression manuelle sur la lame de coupe 5 qui est en appui sur les plots d'entraînement 11 du support de lame, jusqu'à ce que ladite lame 5 soit amenée au niveau de la rainure 19 ; on observe que, durant cette action, les plots d'entraînement 11 du support de lame 2 se trouvent plaqués contre des parties pleines de la lame et distants de 90° des orifices d'accouplement 7. En pratique, ce mouvement de rapprochement convergent obtenu en appuyant sur la lame 5, a pour effet de déplacer le support de lame 2, à l'encontre de l'action antagoniste du ressort 16.
- on imprime un mouvement de rotation de l'ordre de 90° à la lame. Durant cette action (Fig. 7A, 7B, 7C), la lame est guidée par des lumières arquées 8 dans lesquelles coulissent les taquets de centrage 33 solidaires de la base du boîtier extérieur 1A. A la fin de ce mouvement de rotation, les plots d'accouplement 11 pénètrent automatiquement, sous l'action du ressort 16 dans les orifices d'accouplement 7, le support de lame 2 se déplace axialement le long de l'axe d'entraînement 3 sous l'action du ressort de compression 16 jusqu'à l'appui contre le circlips de retenue 13 dudit axe d'entraînement.

On observe que pour faciliter l'action de détachement de la lame ou la mise en place d'une lame de remplacement, les découpes 6, 7, 8 et les parties pleines 5C, constituant la partie centrale des lames selon l'invention sont dimensionnées et aménagées de telle sorte qu'elles permettent soit de maintenir en position d'éloignement les plots d'accouplement 11 et les orifices d'accouplement 7 à l'encontre de la poussée exercée par le ressort 16 soit la pénétration automatique dans les orifices d'accouplement 7 sous la poussée dudit ressort.

Pour faciliter le maintien en position fixe du support de lame 2 lors de cette action de rotation de la lame 5, ledit support de lame 2 est muni sur sa face supérieure de deux tenons 29 (Fig. 6B) qui, lors du déplacement vers le haut dudit support de lame, s'engagent dans deux trous 30 dont est pourvu le cloisonnement supérieur 4 du boîtier extérieur 1 pour s'engager dans les orifices 31 aménagés dans le support fixe 32 de la tête de coupe 1 servant de carter au moteur 37, ce qui évite la rotation dudit support de lame 2 durant cette action.

On remet en place le bol glisseur 1 B par un mouvement axial puis une rotation dudit bol glisseur 1 B par rapport au boîtier extérieur 1.

Pour effectuer le retrait de la lame 5, il faut enlever le bol glisseur 1 B, puis appuyer manuellement sur les plots d'accouplement 11 du support de lame 2 pour les retirer des orifices 7 de la lame 5 et effectuer une rotation de ladite lame 5 d'environ 90°.

Les plots d'entraînement se retrouvent à nouveau contre des parties pleines de la lame de coupe 5 et les lobes 5A engagés dans les gorges 3D de la partie distale 3A de l'arbre d'entraînement 3, ce qui permet à la lame de coupe 5 de se déplacer automatiquement en direction de l'extrémité distale de l'axe d'entraînement 3, jusqu'à son dégagement dudit axe d'entraînement 3, sous l'action du support de lame 2 sur lequel agit le ressort de compression 16.

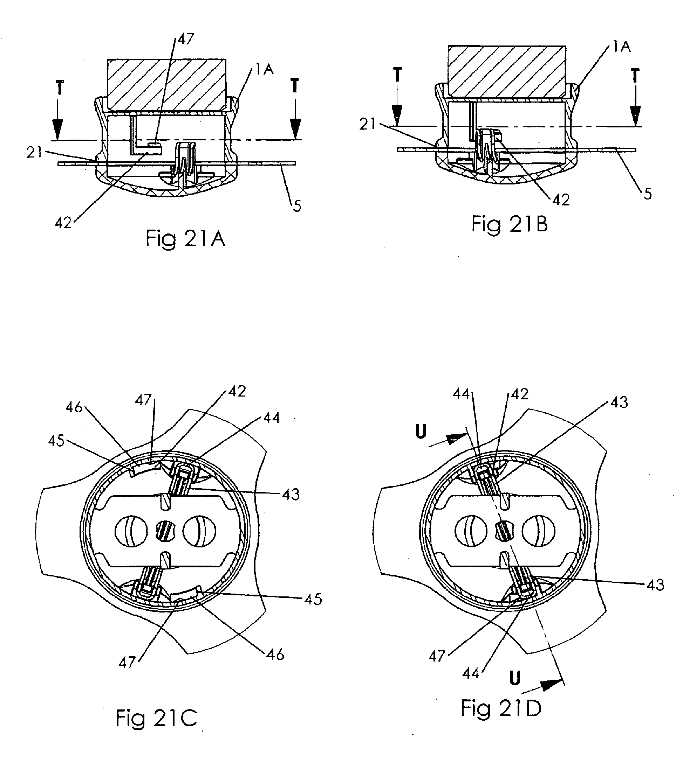

Dans une autre solution constructive (Fig. 21A, 21B, 21C, 21D), on pourvoit la surface interne de la paroi latérale cylindrique du boîtier extérieur 1A, au voisinage et le long de son bord inférieur circulaire 21, d'au moins deux épaulements arrondis 42 qui, selon le mode d'exécution représenté, sont diamétralement opposés.

D'autre part, le bol glisseur 1 B est pourvu d'une pièce ressort en fil d'acier 40, fixée par au moins deux vis 41, formant au moins deux pattes d'accrochage 43 diamétralement opposées s'étendant perpendiculairement à l'axe de celui-ci, et dont les extrémités libres sensiblement en forme de U servent d'ergot de verrouillage 44.

Lors de la rotation du bol glisseur 1B suivant son axe, les ergots de verrouillage 44 viennent en appui sur les épaulements 42 ce qui limite le mouvement de translation dudit bol glisseur par rapport au boîtier extérieur 1A.

Une butée 45 disposée à l'une des extrémités de chaque épaulement 42 limite le mouvement rotatif des ergots de verrouillage 44 lors de la mise en place du bol glisseur 1 B dans la position d'assemblage.

D'autre part, les ergots de verrouillage 44 et la face inférieure de la partie supérieure 1A du boîtier extérieur 1 sont munis de moyens complémentaires de verrouillage en fin de mouvement de rotation, lors de l'assemblage des parties 1A et 1 B du boîtier extérieur 1. Ces moyens peuvent être constitués par la forme en U des ergots de verrouillage 44 et par des tétons 47, diamétralement opposés, prévus à l'intérieur du boîtier extérieur 1A délimitant avec la butée 45 deux logements 46 dans lesquels s'engagent automatiquement lesdits ergots de verrouillage 44 en fin du mouvement rotatif d'assemblage.

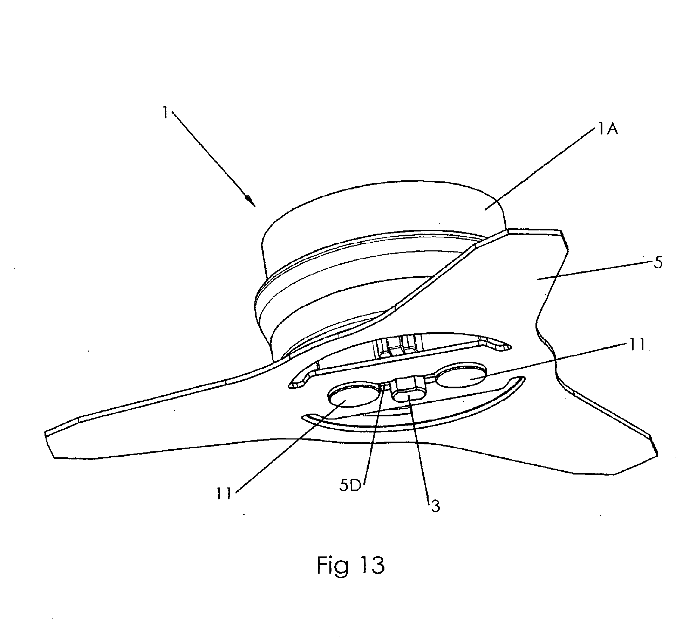

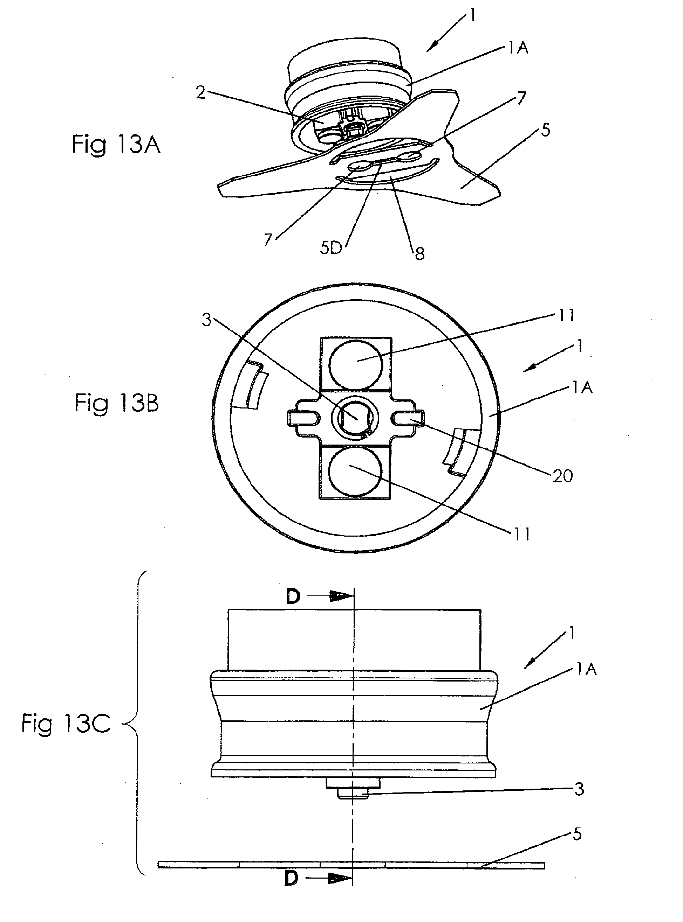

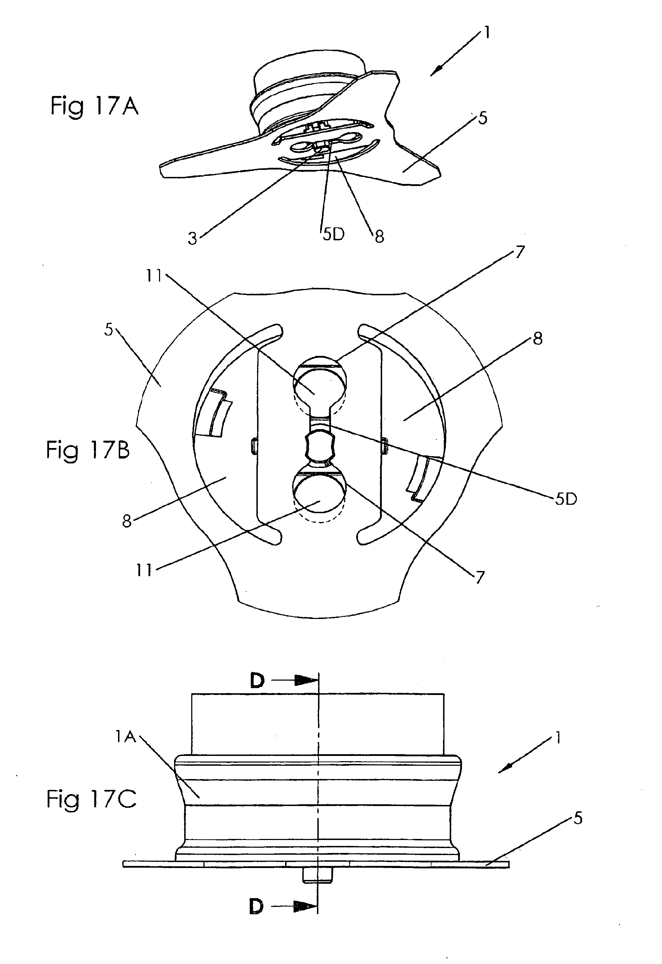

Pour la mise en place d'une lame de coupe illustrée aux figures 13, 15B et 17B :
- on positionne l'un des orifices 7 de ladite lame en regard de l'un des plots d'accouplement 11 ;
- on exerce une pression sur ladite lame qui, par l'intermédiaire de ses parties pleines permet de repousser l'ensemble constitué par le support de lame 2 et les plots d'accouplement 11, à l'encontre de l'action antagoniste exercée par le ressort 16, jusqu'à ce que la fente 5D soit amenée au niveau de la rainure annulaire 19 que présente la portion distale de l'arbre d'entraînement 3 ;
- on imprime manuellement une poussée linéaire à la lame 5, de sorte que les bords longitudinaux de la fente 5D coulissent dans la rainure annulaire 19 jusqu'à ce que les deux plots d'accouplement 11 viennent en regard des deux orifices 7 de la lame ; l'ensemble constitué par le support de lame 2 et les plots d'accouplement 11 se trouve alors repoussé ; lesdits plots pouvant ainsi s'engager automatiquement dans lesdits orifices en assurant le crabotage automatique de la lame 5 et du support de lame 2 et, par conséquent, du boîtier extérieur 1 solidaire en rotation dudit support de lame 2.

L'invention concerne également les appareils de coupe portables, tels que par exemple, coupe-herbe, coupe-bordure, débroussailleuse, taille-haie, ..., munis ou susceptibles d'être équipés d'une tête de coupe comportant les caractéristiques précédemment exposées.

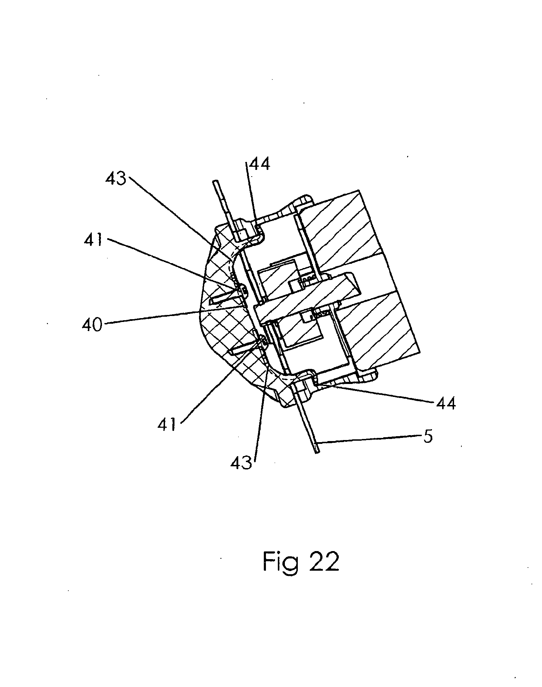

De tels appareils dont un exemple désigné dans son ensemble par la référence 35 à la figure 22, comportent généralement : un manche 36 dont l'extrémité distale supporte la tête de coupe 1, une motorisation 37 installée à la partie inférieure ou à la partie supérieure du manche pour l'entraînement en rotation de la tête de coupe, une poignée en U ou poignée double 38 de guidage et de commande de cette motorisation, un anneau 39 pour la fixation d'un harnais de portage 40. La motorisation d'entraînement de la tête de coupe peut être assurée par un moteur thermique ou par un moteur électrique alimenté par une batterie portable, ou par raccordement au secteur.

## Revendications

1. Tête de coupe rotative destinée à l'équipement d'appareils de coupe portables, tels que coupe-herbe, coupe bordure, débroussailleuse, faux à moteur, taille-haie et analogues, utilisant une lame de coupe, comprenant un boîtier support de lame (1) solidaire en rotation d'un arbre moteur axial d'entraînement (3) et une lame de coupe (5) interchangeable entraînée en rotation avec ledit boîtier support de lame (1), tête dans laquelle l'arbre d'entraînement (3), le boîtier support de lame (1) et la lame (5) sont conformés de sorte à permettre d'engager la lame de coupe (5) autour de l'arbre d'entraînement (3), de la déplacer axialement sur ledit arbre d'entraînement, jusqu'à une position dans laquelle il est possible de lui imprimer un mouvement angulaire ou un mouvement linéaire, le boitier support de lame (1) et la lame de coupe (5) étant pourvus de moyens complémentaires d'accouplement (11, 16, 7) actionnés automatiquement par suite de ce mouvement, de façon à permettre d'effectuer manuellement et sans outil : la mise en place, le changement, le centrage, le positionnement axial de ladite lame (5) par rapport à l'arbre d'entraînement (3), ainsi que l'accouplement en rotation de ladite lame (5) au boîtier support de lame (1), par un déplacement axial associé à un mouvement de déplacement angulaire ou linéaire de ladite lame (5) par rapport à l'arbre d'entraînement (3), jusqu'au déclenchement d'un crabotage automatique réalisé entre ladite lame (5) et ledit boîtier support de lame (1).

2. Tête de coupe rotative selon la revendication 1, **caractérisée en ce qu'**elle comporte un support de lame (2) logé dans le boîtier support de lame (1), et solidaire en rotation de l'arbre d'entraînement (3) et dudit boîtier support (1), ledit support de lame (2) et la lame de coupe (5) étant pourvus de moyens complémentaires d'accouplement en rotation automatique de ladite lame (5) et dudit arbre d'entraînement (3), ce support de lame (2) pouvant être déplacé axialement le long dudit arbre d'entraînement (3) pour réaliser le crabotage automatique entre la lame (5) et le boîtier support de lame (1).

3. Tête de coupe rotative selon l'une des revendications 1 ou 2, utilisant une lame de coupe et comprenant un boîtier extérieur (1), **caractérisée en ce que** ledit boîtier extérieur (1) est constitué d'au moins deux parties, soit une partie supérieure (1A) et une partie inférieure (1B) assemblée de manière démontable à la base de la partie supérieure, une lame de coupe (5) munie d'un passage axial (6), ou d'un passage central (5D), et insérée entre lesdites parties supérieure (1A) et inférieure (1B), un support de lame (2) solidaire en rotation dudit boîtier (1) et traversé par un arbre axial d'entraînement (3) solidaire en rotation dudit support de lame (2), et **en ce que** le support de lame (2) est monté avec une aptitude de mouvement axial par rapport audit boîtier (1) et audit arbre d'entraînement (3).

4. Tête de coupe rotative utilisant une lame de coupe, selon l'une des revendications 2 ou 3, **caractérisée en ce que** la lame de coupe (5) et la portion distale de l'arbre d'entraînement (3) sont pourvus de moyens complémentaires de blocage axial (6A) de ladite lame de coupe (5) sur ladite portion distale de l'arbre d'entraînement.

5. Tête de coupe rotative utilisant une lame de coupe, selon l'une quelconque des revendications 1 à 4, **caractérisée en ce que** les moyens de positionnement et d'accouplement de la lame de coupe (5) au support de lame (2) comprennent, d'une part, deux plots d'accouplement (11) disposés en sous-face (9) dudit support de lame, de part et d'autre de l'ouverture axiale (10) ménagée dans ce dernier et, d'autre part, deux orifices (7) pratiqués de part et d'autre du passage axial (6) de la lame (5) dans lequel est engagée la portion distale de l'arbre d'entraînement (3).

6. Tête de coupe rotative utilisant une lame de coupe, selon l'une des revendications 1 à 4, **caractérisée en ce que** les moyens de positionnement et d'accouplement de la lame de coupe (5) au support de lame (2) comprennent d'une part deux plots d'accouplement (11) disposés en sous-face (9) dudit support de lame (2) et, d'autre part, une fente longitudinale ou boutonnière (5D), ménagée dans la partie médiane (5E) de la lame, ladite ouverture débouchant dans deux orifices (7) ménagés de part et d'autre du centre de la lame (5).

7. Tête de coupe rotative utilisant une lame de coupe, selon l'une des revendications 5 ou 6, **caractérisée en ce que** la partie centrale de la lame est constituée de découpes (6, 7, 8) et de parties pleines (29), deux de ces découpes constituant des orifices d'accouplement (7), ces découpes et parties pleines étant dimensionnées et aménagées de telle sorte qu'elles permettent soit de maintenir en position d'éloignement les plots d'accouplement (11) et les orifices d'accouplement (7) à l'encontre de la poussée exercée par un moyen élastique de pression (16), soit la pénétration automatique desdits plots d'accouplement (11) dans les orifices d' accouplement (7) sous la poussée dudit moyen élastique de pression, lequel tend à communiquer en permanence des mouvements axiaux relatifs divergents audit support de lame (2) et au boîtier extérieur (1).

8. Tête de coupe rotative utilisant une lame de coupe, selon l'une quelconque des revendications 2 à 7, **caractérisée en ce que** l'accouplement en rotation du support de lame intérieur (2) et du boîtier extérieur (1) est réalisé au moyen de doigts d'entraînement (20) solidaires de la face interne de la cloison supérieure (4) du boîtier extérieur (1) et orientés parallèlement à l'axe de rotation de la tête de coupe, à l'intérieur de celle-ci, ces doigts d'entraînement (20) étant engagés avec une aptitude de glissement dans des rainures de guidage et d'accouplement (12) ménagées latéralement dans le support de lame (2).

9. Tête de coupe rotative utilisant une lame de coupe, selon la revendication 8, **caractérisée en ce que** les rainures d'accouplement (12) sont ménagées dans au moins deux côtés opposés du support de lame (2).

10. Tête de coupe rotative utilisant une lame de coupe, selon l'une quelconque des revendications 2 à 9, **caractérisée en ce que** l'arbre d'entraînement (3) traverse un passage axial (10) ménagé dans le support de lame (2), et **en ce que** la portion traversante (3B) de l'arbre (3) et ledit passage axial (10) présentent un profil complémentaire adapté pour permettre l'entraînement en rotation dudit support de lame par ledit arbre d'entraînement.

11. Tête de coupe rotative utilisant une lame de coupe, selon l'une quelconque des revendications 2 à 10, **caractérisée en ce qu'**elle comporte des moyens (13, 14, 17, 18) pour limiter l'amplitude de la translation axiale du support de lame (2) sur la portion traversante (3B) de l'arbre d'entraînement (3).

12. Tête de coupe rotative utilisant une lame de coupe, selon la revendication 7, **caractérisée en ce que** le moyen élastique de pression est constitué par un ressort (16) agissant en compression et interposé entre un cloisonnement supérieur (4) du boîtier extérieur (1) et le support de lame (2).

13. Tête de coupe rotative utilisant une lame de coupe, selon l'une quelconque des revendications 2 à 12, **caractérisée en ce qu'**elle comprend des moyens de positionnement et de blocage axial de la lame de coupe sur l'arbre d'entraînement (3).

14. Tête de coupe rotative utilisant une lame de coupe, selon la revendication 13, **caractérisée en ce que** les moyens permettant le positionnement et le blocage axial de la lame de coupe (5) sur l'arbre d'entraînement (3) comprennent, d'une part, une ouverture axiale (6) que présente la lame de coupe et, d'autre part, une rainure annulaire (19) que comporte la portion distale (3A) de l'arbre d'entraînement (3) à distance de son extrémité, la portion extrême (3A) dudit arbre d'entraînement (3) présentant à partir de ladite rainure (19) une forme circulaire munie de deux gorges longitudinales femelles (3D) diamétralement opposées, tandis que l'ouverture axiale (6) de la lame de coupe (5) présente une forme mâle identique à celle du profil de ladite portion extrême (3A).

15. Tête de coupe rotative utilisant une lame de coupe, selon la revendication 13, **caractérisée en ce que** les moyens permettant le positionnement et le blocage axial de la lame de coupe (5) sur la portion distale de l'arbre d'entraînement (3) comprennent, d'une part, une rainure annulaire (19) que comporte la portion distale (3A) de l'arbre d'entraînement (3) à distance de son extrémité distale et, d'autre part, la fente ou boutonnière (5D), laquelle présente une largeur inférieure au diamètre de ladite portion distale (3A), cette largeur étant prévue pour permettre l'engagement et le coulissement des bords longitudinaux de ladite fente dans la rainure annulaire (19), de sorte que ladite lame de coupe (5) se trouve immobilisée en translation axiale.

16. Tête de coupe rotative utilisant une lame de coupe, selon l'une quelconque des revendications 1 à 15, **caractérisée en ce que** le bord inférieur (21) de la partie supérieure (1A) du boîtier extérieur (1) et la lame de coupe (5) sont pourvus de moyens complémentaires de positionnement (8, 8A, 33).

17. Tête de coupe rotative utilisant une lame de coupe, selon la revendication 16, **caractérisée en ce que** les moyens complémentaires de positionnement de la partie supérieure (1A) du boîtier extérieur (1) et de la lame de coupe (5) comprennent, d'une part, deux lumières (8) délimitées par un bord externe arqué (8A) et disposés de part et d'autre et à égale distance de l'alignement d'ouvertures (7, 6, 7 ; 7-5D-7) que présente la lame (5) et, d'autre part, des taquets de centrage et d'arrêt (33), diamétralement opposés, dont est munie la base de ladite partie supérieure.

18. Tête de coupe rotative utilisant une lame de coupe, selon l'une quelconque des revendications 1 à 17, **caractérisée en ce que** la partie basse de la paroi latérale de la partie supérieure (1A) du boîtier extérieur (1) et la partie supérieure circulaire du bol glisseur (1B) sont munies de moyens de retenue complémentaires (22, 23, 24) dont l'assemblage nécessite seulement un mouvement axial relatif des deux pièces, suivi d'un mouvement de rotation d'amplitude limitée permettant de mettre en prise les organes complémentaires desdits moyens de retenue.

19. Tête de coupe rotative utilisant une lame de coupe, selon la revendication 18, **caractérisée en ce que** les moyens de retenue de la partie supérieure (1A) du boîtier extérieur (1) et du bol glisseur (1B) comprennent, d'une part, au voisinage et le long du bord inférieur circulaire (21) de la surface interne de la paroi latérale cylindrique de la partie supérieure (1A) du boîtier extérieur (1), au moins deux épaulements arrondis (22) diamétralement opposés, et, d'autre part, au moins deux pattes d'accrochage (23) diamétralement opposées s'étendant parallèlement à l'axe du bol glisseur (1 B) et dont l'extrémité libre est munie d'un bec ou ergot de verrouillage (24) orienté en direction de cet axe.

20. Tête de coupe rotative utilisant une lame de coupe, selon la revendication 19, **caractérisée en ce qu'**elle comprend une butée (25) disposée à l'une des extrémités de chaque épaulement (22), limitant le mouvement rotatif des becs ou ergots de verrouillage (24) lors de la mise en place du bol glisseur (1B) dans la position d'assemblage.

21. Tête de coupe rotative utilisant une lame de coupe, selon l'une des revendications 19 ou 20, **caractérisée en ce que** le bord du bec (24) et l'épaulement arrondi (22) des becs sont munis de moyens complémentaires de verrouillage en fin de mouvement de rotation lors de l'assemblage des parties (1A) et (1 B) du boîtier extérieur (1).

22. Tête de coupe rotative utilisant une lame de coupe, selon la revendication 21, **caractérisée en ce que** les moyens complémentaires de verrouillage sont constitués par un téton (26) que présente la face supérieure des épaulements (22) et par une encoche (27) prévue dans le bord extérieur du bec (24), dans laquelle s'engage automatiquement ledit téton de verrouillage en fin du mouvement rotatif d'assemblage.

23. Tête de coupe rotative utilisant une lame de coupe, selon l'une quelconque des revendications 2 à 22, **caractérisée en ce que** lors de la rotation de la lame (5) pour sa mise en place, un dispositif d'anti-rotation du boîtier extérieur (1) et du support de lame (2) est agencé.

24. Tête de coupe rotative utilisant une lame de coupe, selon la revendication 23, **caractérisée en ce que** le dispositif d'anti-rotation est constitué par deux tétons (29) prévus sur la face supérieure du support de lame (2), lesquels lors du déplacement s'engagent dans deux trous (30) dont est pourvu le cloisonnement supérieur (4) de la partie supérieure (1A) du boîtier extérieur (1) et/ou dans deux orifices (31) aménagés dans le support fixe (32) de la tête de coupe.

25. Tête de coupe rotative selon l'une quelconque des revendications 3 à 24, **caractérisée en ce que** les moyens d'assemblage de la partie supérieure 1A du boîtier (1) et du bol glisseur (1 B) comprennent, d'une part au voisinage et le long du bord inférieur circulaire (21) de la surface interne de la paroi latérale cylindrique (1A) du boîtier (1), au moins deux épaulements arrondis (42) diamétralement opposés, et, d'autre part, le bol glisseur 1 B pourvu d'une pièce ressort (40) fixée par au moins deux vis, formant au moins deux pattes d'accrochage (43) diamétralement opposées, s'étendant perpendiculairement à l'axe du bol glisseur (1B) et dont les extrémités libres sensiblement en forme de U servent d'ergot de verrouillage (44) orienté en direction de cet axe.

26. Tête de coupe rotative selon la revendication 25, **caractérisée en ce qu'**elle comprend une butée (45) disposée à l'une des extrémités de chaque épaulement (42) et limitant le mouvement rotatif des becs ou ergots de verrouillage (44) lors de la mise en place du bol glisseur (1B) dans la position d'assemblage.

27. Tête de coupe rotative selon l'une des revendications 25 ou 26, **caractérisée en ce que** le bord des ergots de verrouillages (44) et l'épaulement arrondi (42) des becs sont munis de moyens complémentaires de blocage en fin de mouvement de rotation lors de l'assemblage des parties (1A) et (1 B) du boîtier (1).

28. Tête de coupe rotative selon l'une quelconque des revendications 25 à 27, **caractérisée en ce que** les moyens complémentaires de verrouillage des éléments (1A) et (1B) sont constitués par la forme en U des ergots de verrouillage (44) et par des tétons (41) diamétralement opposés prévus à l'intérieur du boîtier extérieur (1A) délimitant avec la butée (45) deux logements (46) dans lesquels s'engagent automatiquement lesdits ergots de verrouillage en fin du mouvement rotatif d'assemblage.

29. Appareil de coupe portable tel que coupe-herbe, ou coupe-bordure, ou débroussailleuse, ou faux à moteur, ou taille-haie, **caractérisé en ce qu'**il est équipé d'une tête de coupe rotative utilisant une lame de coupe, selon l'une quelconque des revendications 1 à 28.

## Patentansprüche

1. Rotierender Schneidekopf für die Bestückung von tragbaren Schneidegeräten wie Rasentrimmer, Kantenschneider, Freischneider, Motorsense, Heckenschere und Ähnliches unter Verwendung eines Schneideblatts, umfassend ein Blattträgergehäuse (1), das mit einer axialen Motorantriebswelle (3) drehschlüssig verbunden ist, und ein austauschbares Schneideblatt (5), das rotierend mit dem Blattträgergehäuse (1) angetrieben wird, wobei in dem Kopf die Antriebswelle (3), das Blattträgergehäuse (1) und das Blatt (5) abgestimmt sind, sodass ein Eingreifen des Schneideblatts (5) um die Antriebswelle (3) und ihr axiales Verschieben über die Antriebswelle bis zu einer Position ermöglicht werden, in der es möglich ist, für sie eine winkelförmige oder lineare Bewegung zu erzeugen, wobei das Blattträgergehäuse (1) und das Schneideblatt (5) mit komplementären Kupplungsmitteln (11, 16, 7) ausgestattet sind, die automatisch infolge dieser Bewegung ausgelöst werden, damit Folgendes manuell und ohne Werkzeug ausgeführt werden kann: der Einsatz, der Wechsel, die Zentrierung, die axiale Positionierung des Blatts (5) in Bezug auf die Antriebswelle (3) sowie die Rotationskupplung des Blatts (5) mit dem Blattträgergehäuse (1) durch eine Axialverschiebung, die mit einer winkelförmigen oder linearen Verschiebung des Blatts (5) in Bezug auf die Antriebswelle (3) verbunden ist, bis zum Auslösen eines automatischen Formschlusses zwischen dem Blatt (5) und dem Blattträgergehäuse (1).

2. Rotierender Schneidekopf nach Anspruch 1, **dadurch gekennzeichnet, dass** er einen Blattträger (2) umfasst, der in dem Blattträgergehäuse (1) aufgenommen und drehschlüssig mit der Antriebswelle (3) und dem Trägergehäuse (1) verbunden ist, wobei der Blattträger (2) und das Schneideblatt (5) mit selbstdrehenden komplementären Kupplungsmitteln des Blatts (5) und der Antriebswelle (3) ausgestattet sind, wobei der Blattträger (2) axial entlang der Antriebswelle (3) verschoben werden kann, um den automatischen Formschluss zwischen dem Blatt (5) und dem Blattträgergehäuse (1) umzusetzen.

3. Rotierender Schneidekopf nach einem der Ansprüche 1 oder 2, der ein Schneideblatt verwendet und ein Außengehäuse (1) umfasst, **dadurch gekennzeichnet, dass** das Außengehäuse (1) aus mindestens zwei Teilen besteht, einem oberen (1A) und einem unteren Teil (1B), der abnehmbar an der Basis des oberen Teils montiert ist, wobei ein Schneideblatt (5), das mit einem axialen (6) oder einem zentralen Durchgang (5D) ausgestattet ist, zwischen dem oberen (1A) und unteren Teil (1B) eingefügt wird, wobei ein Blattträger (2) drehschlüssig mit dem Gehäuse (1) verbunden ist und von einer axialen Antriebswelle (3) durchdrungen wird, die mit dem Blattträger (2) drehschlüssig verbunden ist, und dadurch, dass der Blattträger (2) in Bezug auf das Gehäuse (1) und die Antriebswelle (3) axial beweglich befestigt ist.

4. Rotierender Schneidekopf, der ein Schneideblatt nach einem der Ansprüche 2 oder 3 verwendet, **dadurch gekennzeichnet, dass** das Schneideblatt (5) und der distale Abschnitt der Antriebswelle (3) mit komplementären Mitteln zur axialen Sicherung (6A) des Schneideblatts (5) auf dem distalen Abschnitt der Antriebswelle ausgestattet sind.

5. Rotierender Schneidekopf, der ein Schneideblatt nach einem der Ansprüche 1 bis 4 verwendet, **dadurch gekennzeichnet, dass** die Positionierungs- und Kupplungsmittel des Schneideblatts (5) an dem Blattträger (2) einerseits zwei Kupplungszapfen (11) an der Unterseite (9) des Blattträgers auf beiden Seiten der axialen Öffnung (10), die sich in letzterer befindet, und andererseits zwei Bohrungen (7) auf beiden Seiten des axialen Durchgangs (6) des Blatts (5) umfassen, der in den distalen Abschnitt der Antriebswelle (3) eingreift.

6. Rotierender Schneidekopf, der ein Schneideblatt nach einem der Ansprüche 1 bis 4 verwendet, **dadurch gekennzeichnet, dass** die Positionierungs- und Kupplungsmittel des Schneideblatts (5) an dem Blattträger (2) einerseits zwei Kupplungszapfen (11) an der Unterseite (9) des Blattträgers (2) und andererseits einen länglichen Schlitz oder ein Langloch (5D) in dem mittleren Teil (5E) des Blatts umfassen, wobei die Öffnung in zwei Bohrungen (7) mündet, die sich auf beiden Seiten des Mittelpunkts des Blatts (5) befinden.

7. Rotierender Schneidekopf, der ein Schneideblatt nach einem der Ansprüche 5 oder 6 verwendet, **dadurch gekennzeichnet, dass** der zentrale Teil des Blatts aus Zuschnitten (6, 7, 8) und geschlossenen Teilen (29) besteht, wobei zwei der Zuschnitte Kupplungsbohrungen (7) darstellen, wobei die Zu-schnitte und geschlossenen Teile so abgemessen und angeordnet sind, dass sie entweder das Halten der Kupplungszapfen (11) und der Kupplungsbohrungen (7) gegenüber einer Kraft, die von einem elastischen Druckmittel (16) ausgeübt wird, in entfernter Position oder das automatische Eindringen der Kupplungszapfen (11) in die Kupplungsbohrungen (7) unter der Kraft des elastischen Druckmittels ermöglichen, welches dauerhaft relative divergente axiale Bewegungen an den Blattträger (2) und das Außengehäuse (1) weiterleitet.

8. Rotierender Schneidekopf, der ein Schneideblatt nach einem der Ansprüche 2 bis 7 verwendet, **dadurch gekennzeichnet, dass** die Rotationskupplung des inneren Blattträgers (2) und des Außengehäuses (1) über Mitnehmer (20) umgesetzt wird, die mit der Innenfläche der oberen Wand (4) des Außengehäuses (1) verbunden und parallel zu der Rotationsachse des Schneidekopfs ausgerichtet sind, wobei die Mitnehmer (20) in seinem Innern gleitbar in Führungs- und Kupplungsnuten (12) eingreifen, die lateral in dem Blattträger (2) angeordnet sind.

9. Rotierender Schneidekopf, der ein Schneideblatt nach Anspruch 8 verwendet, **dadurch gekennzeichnet, dass** die Kupplungsnuten (12) an mindestens zwei gegenüberliegenden Seiten des Blattträger (2) angeordnet sind.

10. Rotierender Schneidekopf, der ein Schneideblatt nach einem der Ansprüche 2 bis 9 verwendet, **dadurch gekennzeichnet, dass** die Antriebswelle (3) einen axialen Durchgang (10) durchdringt, der in dem Blattträger (2) angeordnet ist, und dadurch, dass der durchdringende Abschnitt (3B) der Welle (3) und der axiale Durchgang (10) ein komplementäres Profil aufweisen, das geeignet ist, um den Drehantrieb des Blattträgers durch die Antriebswelle zu ermöglichen.

11. Rotierender Schneidekopf, der ein Schneideblatt nach einem der Ansprüche 2 bis 10 verwendet, **dadurch gekennzeichnet, dass** er Mittel (13, 14, 17, 18) zur Einschränkung der Amplitude der Axialverschiebung des Blattträgers (2) für den durchdringenden Abschnitt (3B) der Antriebswelle (3) umfasst.

12. Rotierender Schneidekopf, der ein Schneideblatt nach Anspruch 7 verwendet, **dadurch gekennzeichnet, dass** das elastische Druckmittel aus einer Feder (16) besteht, die komprimierend wirkt und zwischen einer oberen Wand (4) des Außengehäuses (1) und dem Blattträger (2) angeordnet ist.

13. Rotierender Schneidekopf, der ein Schneideblatt nach einem der Ansprüche 2 bis 12 verwendet, **dadurch gekennzeichnet, dass** er Mittel zur axialen Positionierung und Sicherung des Schneideblatts auf der Antriebswelle (3) umfasst.

14. Rotierender Schneidekopf, der ein Schneideblatt nach Anspruch 13 verwendet, **dadurch gekennzeichnet, dass** die Mittel, welche die axiale Positionierung und Sicherung des Schneideblatts (5) auf der Antriebswelle (3) ermöglichen, einerseits eine axiale Öffnung (6) am Schneideblatt und andererseits eine Ringnut (19) umfassen, die der distale Abschnitt (3A) der Antriebswelle (3) beabstandet von seinem Ende umfasst, wobei der äußerste Teil (3A) der Antriebswelle (3) von der Nut (19) aus eine kreisrunde Form aufweist, die mit zwei weiblichen Längsvertiefungen (3D) ausgestattet ist, die sich diametral gegenüberliegen, während die axiale Öffnung (6) des Schneideblatts (5) eine männliche Form aufweist, die mit derjenigen des Profils des äußersten Teils (3A) identisch ist.

15. Rotierender Schneidekopf, der ein Schneideblatt nach Anspruch 13 verwendet, **dadurch gekennzeichnet, dass** die Mittel, welche die axiale Positionierung und Sicherung des Schneideblatts (5) auf dem distalen Abschnitt der Antriebswelle (3) ermöglichen, einerseits eine Ringnut (19), die der distale Abschnitt (3A) der Antriebswelle (3) beabstandet von seinem distalen Ende umfasst, und andererseits den Schlitz oder das Langloch (5D) mit einer Länge umfassen, die kleiner als der Durchmesser des distalen Abschnitts (3A) ist, wobei die Länge vorgesehen ist, um das Eingreifen und die Verschiebung der Längskanten des Schlitzes in die bzw. der Ringnut (19) zu ermöglichen, sodass das Schneideblatt (5) in der Axialverschiebung blockiert ist.

16. Rotierender Schneidekopf, der ein Schneideblatt nach einem der Ansprüche 1 bis 15 verwendet, **dadurch gekennzeichnet, dass** die untere Kante (21) des oberen Teils (1A) des Außengehäuses (1) und das Schneideblatt (5) mit komplementären Positionierungsmitteln (8, 8A, 33) ausgestattet sind.

17. Rotierender Schneidekopf, der ein Schneideblatt nach Anspruch 16 verwendet, **dadurch gekennzeichnet, dass** die komplementären Positionierungsmittel des oberen Teils (1A) des Außengehäuses (1) und des Schneideblatts (5) einerseits zwei Öffnungen (8), die von einer bogenförmigen äußeren Kante (8A) begrenzt werden und auf beiden Seiten und in gleichem Abstand (von) der Ausrichtung der Öffnungen (7, 6, 7; 7-5D-7) des Blatts (5) angeordnet sind, und andererseits Zentrierungs- und Sperrnasen (33) umfassen, die sich diametral gegenüberliegen und mit denen die Basis des oberen Teils ausgestattet ist.

18. Rotierender Schneidekopf, der ein Schneideblatt nach einem der Ansprüche 1 bis 17 verwendet, **dadurch gekennzeichnet, dass** der untere Teil der Seitenwand des oberen Teils (1A) des Außengehäuses (1) und der kreisförmige obere Teil der Gleitschale (1B) mit komplementären Rückhaltemitteln (22, 23, 24) ausgestattet sind, deren Aufbau lediglich eine relative axiale Bewegung der zwei Teile, auf die eine Rotationsbewegung mit begrenzter Amplitude folgt, wodurch das Ineingriffbringen der komplementären Organe der Rückhaltemittel ermöglicht wird.

19. Rotierender Schneidekopf, der ein Schneideblatt nach Anspruch 18 verwendet, **dadurch gekennzeichnet, dass** die Rückhaltemittel des oberen Teils (1A) des Außengehäuses (1) und der Gleitschale (1B) einerseits in der Nähe und entlang der kreisförmigen unteren Kante (21) der Innenfläche der zylindrischen Seitenwand des oberen Teils (1A) des Außengehäuses (1) mindestens zwei abgerundete Schultern (22), die sich diametral gegenüberliegen, und andererseits mindestens zwei Einhänglaschen (23) umfassen, die sich diametral gegenüberliegen und sich parallel zu der Achse der Gleitschale (1B) ausdehnen und deren freies Ende mit einer Verriegelungsnase oder -warze (24) ausgestattet ist, die in Richtung dieser Achse ausgerichtet ist.

20. Rotierender Schneidekopf, der ein Schneideblatt nach Anspruch 19 verwendet, **dadurch gekennzeichnet, dass** er einen Begrenzer (25) umfasst, der an einem der Enden jeder Schulter (22) angeordnet ist, wodurch die Rotationsbewegung der Verriegelungsnasen oder -warzen (24) beim Einsatz der Gleitschale (1B) in der Verbindungsstellung eingeschränkt wird.

21. Rotierender Schneidekopf, der ein Schneideblatt nach einem der Ansprüche 19 oder 20 verwendet, **dadurch gekennzeichnet, dass** die Kante der Nase (24) und die abgerundete Schulter (22) der Nasen am Ende der Rotationsbewegung während der Verbindung der Teile (1A) und (1B) des Außengehäuses (1) mit komplementären Verriegelungsmitteln ausgestattet sind.

22. Rotierender Schneidekopf, der ein Schneideblatt nach Anspruch 21 verwendet, **dadurch gekennzeichnet, dass** die komplementären Verriegelungsmittel aus einem Stift (26) an der Oberseite der Schultern (22) und einer Kerbe (27) bestehen, die sich in der äußeren Kante der Nase (24) befindet und in welche der Verriegelungsstift automatisch am Ende der Rotationsbewegung zur Verbindung eingreift.

23. Rotierender Schneidekopf, der ein Schneideblatt nach einem der Ansprüche 2 bis 22 verwendet, **dadurch gekennzeichnet, dass** beim Rotieren des Blatts (5) zu seinem Einsatz eine Antirotationsvorrichtung des Außengehäuses (1) und des Blattträgers (2) bereitgestellt wird.

24. Rotierender Schneidekopf, der ein Schneidblatt nach Anspruch 23 verwendet, **dadurch gekennzeichnet, dass** die Antirotationsvorrichtung aus zwei Stiften (29) auf der Oberseite des Blattträgers (2) besteht, die bei der Verschiebung in zwei Öffnungen (30) an der oberen Wand (4) des oberen Teils (1A) des Außengehäuses (1) und/oder zwei Bohrungen (31) eingreifen, die in der festen Halterung (32) des Schneidekopfs angeordnet sind.

25. Rotierender Schneidekopf nach einem der Ansprüche 3 bis 24, **dadurch gekennzeichnet, dass** die Verbindungsmittel des oberen Teils (1A) des Gehäuses (1) und der Gleitschale (1B) einerseits in der Nähe und entlang der kreisförmigen unteren Kante (21) der Innenfläche der zylindrischen Seitenwand (1A) des Gehäuses (1) mindestens zwei abgerundete Schultern (42), die sich diametral gegenüberliegen, und andererseits die Gleitschale (1B) umfassen, die mit einem Federelement (40) vorgesehen ist, das durch mindestens zwei Schrauben befestigt ist, wobei mindestens zwei Einhänglaschen (43) geformt werden, die sich diametral gegenüberliegen und sich senkrecht zu der Achse der Gleitschale (1B) ausdehnen und deren freie Enden etwa in U-Form als Verriegelungswarze (44) dienen, die in Richtung dieser Achse ausgerichtet ist.

26. Rotierender Schneidekopf nach Anspruch 25, **dadurch gekennzeichnet, dass** er einen Begrenzer (45) umfasst, der an einem der Enden jeder Schulter (42) angeordnet ist und die Rotationsbewegung der Verriegelungsnasen oder -warzen (44) beim Einsatz der Gleitschale (1B) in der Verbindungsstellung einschränkt.

27. Rotierender Schneidekopf nach einem der Ansprüche 25 oder 26, **dadurch gekennzeichnet, dass** die Kante der Verriegelungswarzen (44) und die abgerundete Schulter (42) der Nasen am Ende der Rotationsbewegung während der Verbindung der Teile (1A) und (1B) des Gehäuses (1) mit komplementären Verriegelungsmitteln ausgestattet sind.

28. Rotierender Schneidekopf nach einem der Ansprüche 25 bis 27, **dadurch gekennzeichnet, dass** die komplementären Verriegelungsmittel der Elemente (1A) und (1B) aus der U-Form der Verriegelungswarzen (44) und den Stiften (41) bestehen, die sich diametral gegenüberliegen und an der Innenseite des Außengehäuses (1A) vorgesehen sind, wobei sie zusammen mit dem Begrenzer (45) zwei Aufnahmen (46) begrenzen, in welche die Verriegelungswarzen automatisch am Ende der Rotationsbewegung zur Verbindung eingreifen.

29. Tragbares Schneidegerät wie Rasentrimmer, Kantenschneider, Freischneider, Motorsense oder Heckenschere, **dadurch gekennzeichnet, dass** es mit einem rotierenden Schneidekopf ausgestattet ist, der ein Schneideblatt nach einem der Ansprüche 1 bis 28 verwendet.

## Claims

1. A rotary cutting head intended for fitting to portable cutting devices such as a grass cutter, an edge cutter, a shrub cutter, a motorised scythe, a hedge trimmer or the like, using a cutting blade, comprising a blade support housing (1) fixed in respect of rotation to an axial motor drive shaft (3) and an interchangeable cutting blade (5) driven in rotation with said blade support housing (1), in which head the drive shaft (3), the blade support housing (1) and the blade (5) are so shaped as to permit engagement of the cutting blade (5) around the drive shaft (3) and displacement thereof axially on said drive shaft to a position in which it is possible to impart thereto an angular movement or a linear movement, the blade support housing (1) and the cutting blade (5) being provided with complementary coupling means (11, 16, 7) automatically actuated as a consequence of said movement so as to make it possible to effect manually and without a tool: fitment, changing, centring, axial positioning of said blade (5) with respect to the drive shaft (3) as well as rotational coupling of said blade (5) to the blade support housing (1) by an axial displacement associated with an angular or linear displacement movement of said blade (5) with respect to the drive shaft (3) until triggering of an automatic dog coupling between said blade (5) and said blade support housing (1).

2. A rotary cutting head according to claim 1 **characterised in that** it comprises a blade support (2) accommodated in the blade support housing (1) and fixed in respect of rotation to the drive shaft (3) and said blade support (1), said blade support (2) and the cutting blade (5) being provided with complementary means for automatic rotational coupling of said blade (5) and said drive shaft (3), wherein said blade support (2) can be displaced axially along said drive shaft (3) to implement automatic dog coupling between the blade (5) and the blade support housing (1).

3. A rotary cutting head according to one of claims 1 and 2 using a cutting blade and comprising an external housing (1), **characterised in that** said external housing (1) is formed by at least two parts, namely an upper part (1A) and a lower part (1B) which is removably assembled to the base of the upper part, a cutting blade (5) provided with an axial passage (6) or a central passage (5D) and inserted between said upper part (1A) and said lower part (1B), a blade support (2) which is fixed in respect of rotation to said housing (1) and through which there passes an axial drive shaft (3) fixed in respect of rotation to said support blade (1), and that the blade support (2) is mounted with a capability of axial movement with respect to said housing (1) and said drive shaft (3).

4. A rotary cutting head using a cutting blade, according to one of claims 2 and 3, **characterised in that** the cutting blade (5) and the distal portion of the drive shaft (3) are provided with complementary means (6A) for axial blocking of said cutting blade (5) on said distal portion of the drive shaft.

5. A rotary cutting head using a cutting blade, according to any one of claims 1 to 4, **characterised in that** the means for positioning and coupling of the cutting blade (5) to the blade support (2) comprise on the one hand two coupling studs (11) disposed at the underneath surface (9) of said blade support on respective sides of the axial opening (10) provided in the latter and on the other hand two orifices (7) on respective sides of the axial passage (6) of the blade (5), in which the distal portion of the drive shaft (3) is engaged.

6. A rotary cutting head using a cutting blade, according to any one of claims 1 to 4, **characterised in that** the means for positioning and coupling of the cutting blade (5) to the blade support (2) comprise on the one hand two coupling studs (11) disposed at the underneath surface (9) of said blade support (2) and on the other hand a longitudinal slot or buttonhole (5D) provided in the median part (5E) of the blade, said opening opening into two orifices (7) provided on respective sides of the centre of the blade (5).

7. A rotary cutting head using a cutting blade, according to one of claims 5 and 6, **characterised in that** the central part of the blade is formed by cut-outs (6, 7, 8) and solid parts (29), two of said cut-outs constituting coupling orifices (7), said cut-outs and solid parts being so dimensioned and arranged that they permit either the coupling studs (11) and the coupling orifices (7) to be maintained in a spaced position against the thrust force exerted by an elastic pressure means (16), or automatic penetration of said coupling studs (11) into the coupling orifices (7) under the thrust force of said elastic pressure means, which tends to permanently communicate divergent relative axial movements to said blade support (2) and to the external housing (1).

8. A rotary cutting head using a cutting blade, according to any one of claims 2 to 7, **characterised in that** rotational coupling of the internal blade support (2) and the external housing (1) is effected by means of drive fingers (20) fixed with respect to the internal face of the upper partitioning (4) of the external housing (1) and oriented parallel to the axis of rotation of the cutting head, in the interior thereof, said drive fingers (20) being engaged with a capability of sliding movement in guide and coupling grooves (12) provided laterally in the blade support (2).

9. A rotary cutting head using a cutting blade, according to claim 8, **characterised in that** the coupling grooves (12) are provided in at least two opposite sides of the blade support (2).

10. A rotary cutting head using a cutting blade, according to any one of claims 2 to 9, **characterised in that** the drive shaft (3) passes through an axial passage (10) in the blade support (2) and that the passing portion (3B) of the shaft (3) and said axial passage (10) have a complementary profile adapted to permit said blade support to be driven in rotation by said drive shaft.

11. A rotary cutting head using a cutting blade, according to any one of claims 2 to 10, **characterised in that** it comprises means (13, 14, 17, 18) for limiting the amplitude of the axial translatory movement of the blade support (2) on the passing portion (3B) of the drive shaft (3).

12. A rotary cutting head using a cutting blade, according to claim 7, **characterised in that** the elastic pressure means is formed by a spring (16) acting in compression and interposed between an upper partitioning (4) of the external housing (1) and the blade support (2).

13. A rotary cutting head using a cutting blade, according to any one of claims 2 to 12, **characterised in that** it comprises means for axial positioning and blocking of the cutting blade on the drive shaft (3).

14. A rotary cutting head using a cutting blade, according to claim 13, **characterised in that** the means permitting axial positioning and blocking of the cutting blade (5) on the drive shaft (3) comprise on the one hand an axial opening (6) in the cutting blade and on the other hand an annular groove (19) on the distal portion (3A) of the drive shaft (3) at a spacing from its end, the end portion (3A) of said drive shaft (3) being from said groove (19) of a circular shape provided with two diametrally opposite female longitudinal grooves (3D) while the axial opening (6) of the cutting blade (5) is of a male shape identical to that of the profile of said end portion (3A).

15. A rotary cutting head using a cutting blade, according to claim 13, **characterised in that** the means permitting axial positioning and blocking of the cutting blade (5) on the distal portion of the drive shaft (3) comprise on the one hand an annular groove (19) in the distal portion (3A) of the drive shaft (3) at a spacing from its distal end and on the other hand the slot or buttonhole (5D) which is of a width smaller than the diameter of said distal portion (3A), said width being provided to permit engagement and sliding movement of the longitudinal edges of said slot in the annular groove (19) such that said cutting blade (5) is immobilised in respect of axial translation.

16. A rotary cutting head using a cutting blade, according to any one of claims 1 to 15, **characterised in that** the lower edge (21) of the upper part (1A) of the external housing (1) and the cutting blade (5) are provided with complementary positioning means (8, 8A, 33).

17. A rotary cutting head using a cutting blade, according to claim 16, **characterised in that** the complementary means for positioning the upper part (1A) of the external housing (1) and the cutting blade (5) comprise on the one hand two apertures (8) delimited by an arcuate external edge (8A) and disposed on respective sides and at an equal spacing from the alignment of openings (7, 6, 7; 7-5D-7) in the blade (5) and on the other hand diametrally opposite centering and stop pegs (33) with which the base of said upper part is provided.

18. A rotary cutting head using a cutting blade, according to any one of claims 1 to 17, **characterised in that** the low part of the side wall of the upper part (1A) of the external housing (1) and the upper circular part of the sliding bowl (1B) are provided with complementary retaining means (22, 23, 24), the assembly of which requires only a relative axial movement of the two parts followed by a rotary movement of limited amplitude permitting engagement of the complementary members of said retaining means.

19. A rotary cutting head using a cutting blade, according to claim 18, **characterised in that** the retaining means of the upper part (1A) of the external housing (1) and the sliding bowl (1B) comprise on the one hand in the vicinity of and along the lower circular edge (21) of the internal surface of the cylindrical side wall of the upper part (1A) of the external housing (1), at least two diametrally opposite rounded shoulders (22), and on the other hand at least two diametrally opposite latching tabs (23) extending parallel to the axis of the sliding bowl (1B) and the free end of which is provided with a locking lug or projection (24) oriented in the direction of said axis.

20. A rotary cutting head using a cutting blade, according to claim 19, **characterised in that** it comprises an abutment (25) disposed at one of the ends of each shoulder (22) for limiting the rotary movement of the locking lugs or projections (24) when the sliding bowl (1B) is set in place in the assembly position.

21. A rotary cutting head using a cutting blade, according to one of claims 19 and 20, **characterised in that** the edge of the projection (24) and the rounded shoulder (22) of the projections are provided with complementary locking means at the end of the rotary movement upon assembly of the parts (1A) and (1B) of the external housing (1).

22. A rotary cutting head using a cutting blade, according to claim 21, **characterised in that** the complementary locking means are formed by a pin (26) on the upper face of the shoulders (22) and by a notch (27) in the external edge of the projection (24), into which said locking pin automatically engages at the end of the rotary assembly movement.

23. A rotary cutting head using a cutting blade, according to one of claims 2 to 22, **characterised in that** an anti-rotation device for the external housing (1) and the blade support (2) is operated upon rotation of the blade (5) for fitting it in place.

24. A rotary cutting head using a cutting blade, according to claim 23, **characterised in that** the anti-rotation device is formed by two pins (29) provided on the upper face of the blade support (2) and which upon displacement engage into two holes (30) with which the upper partitioning (4) of the upper part (1A) of the external housing (1) is provided and/or into two orifices (31) in the fixed support (32) of the cutting head (25).

25. A rotary cutting head according to any one of claims 3 to 24 **characterised in that** the means for assembly of the upper part (1A) of the housing (1) and the sliding bowl (1B) comprise on the one hand in the vicinity of and along the lower circular edge (21) of the internal surface of the cylindrical side wall (1A) of the housing (1) at least two diametrally opposite rounded shoulders (42) and on the other hand the sliding bowl (1B) provided with a spring portion (40) fixed by at least two screws forming at least two diametrally opposite latching tabs (43) extending perpendicularly to the axis of the sliding bowl (1B) and the free ends of which substantially of a U-shape serve as a locking lug (15A) oriented in the direction of said axis.

26. A rotary cutting head according to claim 25 **characterised in that** it comprises an abutment (45) disposed at one of the ends of each shoulder (42) and limiting the rotary movement of the locking lugs or projections (44) when the sliding bowl (1B) is set in place in the assembly position.

27. A rotary cutting head according to one of claims 25 and 26 **characterised in that** the edge of the locking lugs (44) and the rounded shoulder (42) of the projections are provided with complementary blocking means at the end of the rotary movement upon assembly of the parts (1A) and (1B) of the housing (1).

28. A rotary cutting head according to any one of claims 25 to 27 **characterised in that** the complementary means for locking the elements (1A) and (1B) are formed by the U-shape of the locking lugs (44) and by diametrally opposite pins (41) provided at the interior of the external housing (1A) delimiting with the abutment (45) two housing means (46) in which said locking lugs automatically engage at the end of the rotary assembly mouvement.

29. A portable cutting device such as a grass cutter or edge cutter or shrub cutter or motorised scythe or hedge trimmer **characterised in that** it is equipped with a rotary cutting head using a cutting blade, according to any one of claims 1 to 28.
